(19) Europäisches Patentamt
European Patent Office
Office européen des brevets

(11) Veröffentlichungsnummer: **0 054 217**
**B1**

(12) # EUROPÄISCHE PATENTSCHRIFT

(45) Veröffentlichungstag der Patentschrift: **27.06.84**

(51) Int. Cl.³: **C 09 B 1/20**, C 09 B 1/58, C 09 B 1/54, C 09 K 3/34

(21) Anmeldenummer: **81110030.4**

(22) Anmeldetag: **01.12.81**

(54) **Anthrachinonfarbstoffe, Verfahren zu ihrer Herstellung, ihre Verwendung sowie flüssigkristalline Materialien enthaltend Anthrachinonfarbstoffe.**

(30) Priorität: **12.12.80 DE 3046904**

(43) Veröffentlichungstag der Anmeldung: **23.06.82 Patentblatt 82/25**

(45) Bekanntmachung des Hinweises auf die Patenterteilung: **27.06.84 Patentblatt 84/26**

(84) Benannte Vertragsstaaten: **CH DE FR GB IT LI**

(56) Entgegenhaltungen:
**EP - A - 0 002 104**
**EP - A - 0 034 832**
**DE - C - 892 224**
**FR - A - 1 345 377**
**FR - A - 2 463 799**
**GB - A - 2 043 097**
**GB - A - 2 074 182**

(73) Patentinhaber: **BAYER AG, Konzernverwaltung RP Patentabteilung, D-5090 Leverkusen 1 Bayerwerk (DE)**

(72) Erfinder: **Blunck, Martin, Dr., Steegerstrasse 7, D-5000 Koeln 80 (DE)**
Erfinder: **Claussen, Uwe, Dr., Carl-Rumpff-Strasse 29, D-5090 Leverkusen 1 (DE)**
Erfinder: **Neeff, Rütger, Dr., Berta-von-Suttner-Strasse 22, D-5090 Leverkusen (DE)**

**EP 0 054 217 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft neue Anthrachinonfarbstoffe der Formel

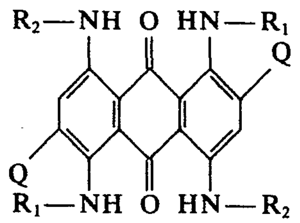

(I)

Verfahren zu ihrer Herstellung, ihre Verwendung zum Färben sowie flüssigkristalline Materialien enthaltend diese Anthrachinonfarbstoffe.

In Formel (I) bedeuten:

$R_1$, $R_2$ Wasserstoff, Alkyl, Cycloalkyl, Aryl oder Aralkyl, wobei die genannten Kohlenwasserstoffreste substituiert sein können und

Q einen Aryl- oder heterocyclischen Rest oder einen Rest

$$-O-R' \quad -S-R' \quad -CH{=}N-R' \quad -\underset{\underset{O}{\|}}{C}-O-R' \quad -CHO$$

oder

$$-SO_2-O-R'$$

wobei

R' für einen Aryl-, Aralkyl- oder heterocyclischen Rest steht, wobei die für R' genannten Reste substituiert sein können; ausgenommen ist die Verbindung, bei der $R_1$, $R_2$ Wasserstoff und Q gleichzeitig Phenoxy bezeichnen.

Die einzelnen Substituenten haben beispielsweise folgende Bedeutungen:

$R_1$, $R_2$ Wasserstoff, $C_1-C_6$-Alkyl, $C_3-C_7$-Cycloalkyl, gegebenenfalls durch $C_1-C_4$-Alkyl, Cyclohexyl, $C_1-C_4$-Alkoxy, ($C_1-C_4$-Alkyl)-carbonyl substituiertes Phenyl, Naphthyl, Benzyl, Phenethyl.

Q Phenyl, Naphthyl, Thienyl, die beispielsweise durch Hydroxy, Halogen, vorzugsweise Chlor, $C_1-C_4$-Alkoxy, $C_1-C_4$-Alkyl, Phenoxy, $C_1-C_4$ -Alkoxy-$C_1-C_4$-alkoxy, Chlor-$C_1-C_4$-Alkoxy, $C_1-C_4$-Alkylthio, $C_1-C_4$-Alkoxy-$C_1-C_4$-alkylthio, Chlor-$C_1-C_4$-alkylthio, ($C_1-C_4$-Alkoxy)-carbonyloxy, Benzoyloxy, Benzylcarbonyloxy, Phenyl, Benzyl und Cyclohexyl substituiert sein können,

R' Phenyl, das durch $C_1-C_{10}$-Alkyl, vorzugsweise $C_1-C_4$-Alkyl, $C_1-C_6$-Alkoxy, Cyclohexyl, Halogen, vorzugsweise Chlor und Brom, Cyan-$C_1-C_4$-alkyl, $C_1-C_4$-Alkylthio, Phenoxy, Phenylthio, Hydroxy, Cyan, Mono- und Di-$C_1-C_4$-alkylamino, Phenylamino, Mono- und Di-$C_1-C_4$-alkylaminosulfonyl, Phenylaminosulfonyl und Hydroxyphenylaminosulfonyl substituiert sein kann; Formyl; Naphthyl; Benzyl; Phenethyl; einen 5- oder 6gliedrigen, ein bis drei Heteroatome aus der Reihe O, N, S enthaltenden heterocyclischen Ring, der beispielsweise durch $C_1-C_4$-Alkyl oder Phenyl substituiert sein kann, und an den ein oder zwei Benzolringe ankondensiert sein können.

Bevorzugte Farbstoffe entsprechen der Formel

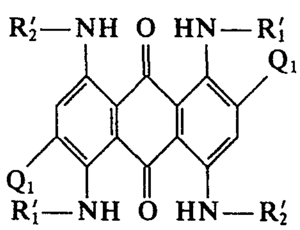

(II)

in der

$R_1'$, $R_2'$ Wasserstoff, Alkyl, Aryl und

$Q_1$ ggf. substituiertes Phenyl,

$-OR'$ $-SR'$ $-CH=N-R'$ $-\underset{\underset{O}{\|}}{C}-O-R'$ $-CHO$

oder

$-SO_2-O-R'$

bezeichnen, wobei R' die zu Formel (I) angegebenen Bedeutungen hat.

$R_1'$, $R_2'$ stehen besonders bevorzugt für Wasserstoff, $C_1-C_4$-Alkyl oder ggf. durch Cyclohexyl, $C_1-C_4$-Alkyl, $C_1-C_4$-Alkoxy, ($C_1-C_4$-Alkoxy)-carbonyl und ($C_1-C_4$-Alkyl)-carbonyl substituiertes Phenyl, mit Ausnahme der Verbindung, bei der $R_1'$ und $R_2'$ Wasserstoff und Q gleichzeitig Phenoxy bedeuten.

Bevorzugt sind weiterhin Farbstoffe der Formel (II), bei denen $R_1'$ und/oder $R_2'$ Wasserstoff bedeuten, mit Ausnahme der Verbindung, bei der $R_1'$ und $R_2'$ Wasserstoff und Q gleichzeitig Phenoxy bedeuten.

Bevorzugte Farbstoffe sind außerdem solche der Formel

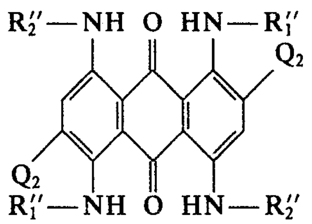

(III)

in der

$R_1''$, $R_2''$ Wasserstoff, 4-Cyclohexylphenyl, 4-Methylphenyl, Dimethylphenyl, Ethylphenyl, 4-Methoxyphenyl, 2,6-Diethoxy-4-methylphenyl, 4-Ethoxycarbonyl-phenyl und

$Q_2$ Phenyl, 4-Methoxyphenyl, Formyl, Phenoxycarbonyl, Phenoxy, 2-Chlorphenoxy, 4-Methylphenoxy, 2-Ethoxyphenoxy, 4-Methoxyphenoxy, 4-(β-Cyanethyl)-phenoxy, 3-Chlorphenoxy, 4-Phenylphenoxy, 3-Methylphenoxy, 4-Chlorphenoxy, p-(2-Phenyl-propyl2)-phenoxy, 2-Methylphenoxy, 2-Methoxyphenoxy, 4-Methylthiophenoxy, 4-t.-Butylphenoxy, 3-Methoxyphenoxy, 4-(4'-Hydroxyphenyl-aminosulfonyl)-phenoxy, 2-Ethylphenoxy, 4-Hydroxyphenoxy, 3-Cyanphenoxy, 4-Phenylthiophenoxy, 1,1,3,3-Tetramethylbutyl-(1)-phenoxy, 4-Cyclohexylphenoxy, 4-Phenylaminosulfonyl-phenoxy, 2-Chlorphenoxysulfonyl, 1-Naphthyloxy, Phenoxycarbonyl, Phenethyloxy, N-(4-Methylphenyl)-formimidoyl, N-(Dibenzofuranyl2)-formimidoyl, N-(4-Cyclohexylphenyl)-formimidoyl, N-(4-Phenylamino-phenyl)-formimidoyl, N-(4-Phenylthiazolyl-2)-formimidoyl und N-(4-Methoxyphenyl)-formimidoyl bezeichnen, mit Ausnahme der Verbindung, bei der $R_1''$ und $R_2''$ Wasserstoff und Q gleichzeitig Phenoxy bedeuten.

Bevorzugte Farbstoffe sind weiterhin solche der Formel

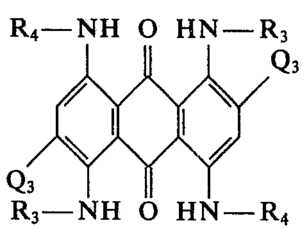

(IV)

in der

$R_3$, $R_4$ Wasserstoff, gegebenenfalls durch $C_1-C_4$-Alkyl oder Cyclohexyl substituiertes Phenyl oder Cyclohexyl bezeichnet und

$Q_3$ für Phenoxy oder Phenylthio, die durch $C_1-C_8$-Alkyl, Cyclohexyl, $C_1-C_4$-Alkoxy, Hydroxy-$C_1-C_4$-alkoxy, Chlor und Brom substituiert sein können, oder einen gegebenenfalls durch Phenyl, $C_1-C_8$-Alkylphenyl, Cyclohexyl, $C_1-C_4$-Alkoxyphenyl und (Hydroxy-$C_1-C_4$-alkoxy)-phenyl N-substituierten Formimidoylrest oder einen Benzthiazolylrest stehen, mit Ausnahme der Verbindung, bei der $R_3$ und $R_4$ Wasserstoff und $Q_3$ gleichzeitig Phenoxy bedeuten.

Die Herstellung der neuen Farbstoffe erfolgt nach an sich bekannten Verfahren (s. z. B. Houben—Weyl, Bd. 7/3c, S. 144—147, S. 171—181, S. 198—199, S. 244—245).

Zur Einführung der Amino-Gruppen benutzt man die breit anwendbare Methode des Austausches von Substituenten in den α-Stellungen des Anthrachinons. Bevorzugt ist der Halogenaustausch, wobei Umsetzungen mit aromatischen Aminen im Überschuß oder in Nitrobenzollösung in Gegenwart schwach basischer Salze und katalytisch wirksamer Kupferverbindungen oder der Austausch mit Arylsulfonamiden und nachfolgende Verseifung allgemein gangbare Wege sind.

Man gelangt so zu tetrasubstituierten Anthrachinonen, deren α-Stellungen je nach Wahl der Ausgangsstoffe und Amine entweder gleich oder paarweise in 1,5- und 4,8-Stellung substituiert sind.

Ein besonders gut verwendbares Ausgangsprodukt ist das 1,5-Diamino 2,4,6,8-Tetrabromanthrachinon. Die Substituenten in den β-Stellungen werden ebenfalls durch Austausch eingeführt. Geeignete Abgangsgruppen sind Halogenatome oder der $SO_3H$-Rest, wobei man die nucleophilen Reagentien bei erhöhter Temperatur einwirken läßt. Bevorzugt sind hier Alkoholate, Phenolate oder Thiolate, wobei man ggf. Cu-II-Salze zur Erleichterung des Austausches verwenden kann. Man kann die Reaktion in Gegenwart organisch hochsiedender polarer Lösungsmittel, wie DMF, Nitrobenzol oder Alkoholen durchführen, in geeigneten Fällen aber auch das Reagenz im Überschuß als Lösungsmittel verwenden.

Die 2,6-Disulfonsäureester lassen sich über die bekannten Verfahren, z. B. über die Säurechloride mit Alkoholaten oder Phenolaten herstellen.

Verbindungen der Formel

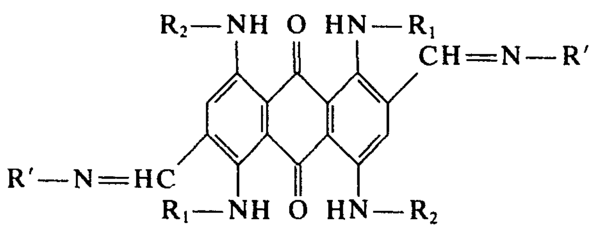

(V)

in der

$R_1$, $R_2$ und R' die oben angegebene Bedeutung haben, sind über eine zweifache Marschalk-Reaktion (Houben—Weyl Bd. 7/3c, S. 188—199) zugänglich. Ausgehend von der Diaminoverbindung (VI) stellt man zunächst die Diamino-dimethylverbindung (VII) her, die dann in den freien α-Stellungen nitriert wird. Die Nitrogruppen werden entweder direkt reduziert oder gegen Amine ausgetauscht (Houben—Weyl Bd. 7/3c, S. 183—185).

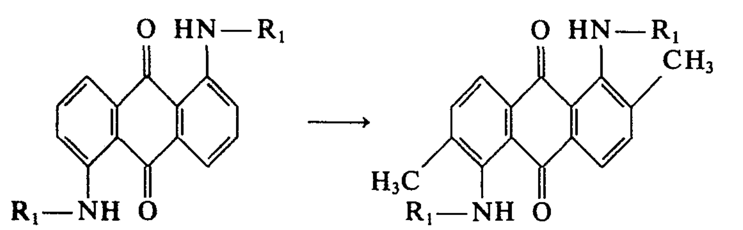

(VI) (VII)

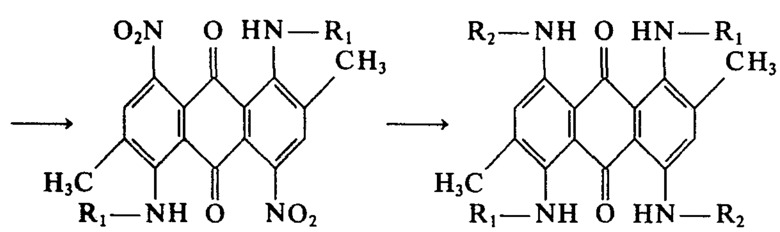

(VII) (IX)

Den Bisaldehyd erhält man durch Verseifung des tetra α-substituierten 2,6-Bisanils des Anthrachinons. Dieses entsteht bei der Oxydation mit z. B. Nitrobenzol in Gegenwart schwachen Alkalis und Anilin. Die Umsetzung des 2,6-Diformyl-tetraaminsubstituierten Anthrachinons zu den Schiff-Basen erfolgt durch Zugabe der Amine zu einer Lösung des Aldehyds nach literaturbekannten Verfahren.

Die Reinigung der neuen Verbindungen kann auf die übliche Weise erfolgen.

Besonders bewährt haben sich chromatographische Reinigungsverfahren wie die Säulenchromato graphie wie die Säulenchromatographie an Kieselgel. Die neuen Farbstoffe eignen sich zum Färben von textilen Materialien vorzugsweise auf Polyesterbasis oder zum Massefärben von Kunststoffen wie

z. B. Polystyrol, Polyvinylchlorid, Polycarbonat u. a. Vorzugsweise finden sie jedoch Verwendung in flüssigkristallinen Materialien. Die Erfindung betrifft demnach weiterhin flüssigkristalline Materialien, welche Anthrachinonfarbstoffe der Formel (I) enthalten. Das flüssigkristalline Material hat vorzugsweise positive dielektrische Anisotropie und kann in opto-elektronischen Anzeigevorrichtungen eingesetzt werden.

Opto-elektronische Anzeigeelemente bestehen in der Regel aus 2 parallel (im Abstande von 5—50 μ) angeordneten Glasplatten. An deren Innenseiten werden Elektroden angebracht, zwischen denen das flüssigkristalline Material eingebettet wird. Die Funktionsfähigkeit einer opto-elektronischen Anzeige beruht auf der orientierten Struktur der Flüssigkristalle, die sich durch das angelegte elektrische Feld verändern läßt.

Die orientierte Struktur der flüssigkristallinen Materialien kann sich geeigneten Farbstoffen mitteilen, so daß diese als »Gäste« an der Struktur teilnehmen. Man hat dieses Phänomen daher auch als Wirt-Gast-Wechselwirkung bezeichnet [Heilmeier, Castellano, Zanoni: Mol. Crystals a. Liquid Cryst., (8) 293—304 1969].

Die Güte dieser Wechselwirkung ist durch die mittlere Abweichung der geometrischen Achse der Farbstoffmoleküle von der durch die Moleküle des flüssigkristallinen Materials vorgegebenen Vorzugsrichtung angebbar. Man kann einen Ordnungsgrad S definieren, der die mittlere Abweichung berücksichtigt und bei vollkommener Ordnung den Wert 1.0 annimmt. Praktisch wird dieser Wert nicht erreicht, vielmehr sind die S-Werte stets $<1.0$. Die in der Literatur angegebenen Werte sind wegen unterschiedlicher Meßtechniken nicht ohne weiteres vergleichbar. Die Definition des Ordnungsgrades und seine Bedeutung ist bei D. L. White und G. N. Taylor: J. Appl. Phys. (5) 4718—23 1974 oder beispielsweise in EP-A-2 104 beschrieben.

Für die technische Verwendung sind Farbstoffe mit hohem Ordnungsgrad besonders wertvoll. Jedoch müssen eine Reihe weiterer Eigenschaften vorhanden sein. Der Farbstoff muß ladungsfrei sein. Andernfalls würde er im elektrischen Feld zwischen den Elektroden wandern. Die photochemische Stabilität muß sehr gut sein, der Farbton darf im Licht weder verschießen noch ausbleichen. Darüberhinaus wird eine gute chemische Beständigkeit in dem komplex zusammengesetzten flüssigkristallinem Medium verlangt. Schließlich muß sich der Farbstoff gut lösen und darf auch bei anhaltend tiefen Temperaturen nicht kristallisieren.

Es ist offensichtlich, daß es nicht viele Stoffe gibt, die die Gesamtheit aller Eigenschaften in zufriedenstellender Weise erfüllen. Eine notwendige Voraussetzung für die Brauchbarkeit der Farbstoffe ist der Dichroismus der Lichtabsorption in Abhängigkeit von der Orientierung der Wirt-Flüssigkristalle.

In der Literatur sind zahlreiche Hinweise auf strukturelle Voraussetzungen geeigneter Farbstoffe angegeben, was ihre pleochroitische Eigenschaft angeht. So wird stets eine lange Achse, eine stabförmige, planare und symmetrische Struktur als Voraussetzung angesehen (F. Jones, T. J. Reeve: J. Soc. Dyers Col. 1979 352—359; J. Constant et al.: J. Phys. D: Appl. Phys. (11) 479 1978).

Zum Einsatz in flüssigkristallinen Materialien sind Farbstoffe der Formel

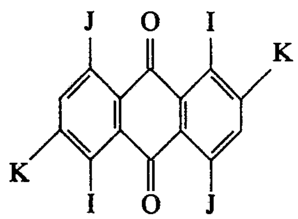

(X)

besonders bevorzugt. Die Substituenten I, J und K werden wie folgt ermittelt:

Der Ordnungsgrad S soll $>0{,}74$ sein und nach der Formel

$$S = \frac{e^{y} \cdot 0{,}85}{1 + e^{y}} \qquad (A)$$

berechnet werden, wobei ein Grundwert von 0,95 für den Fall, daß I = J = K = Wasserstoff, vorgegeben wird. Zu diesem Grundwert addiert man die in den folgenden Tabellen angegebenen Inkremente unter Berücksichtigung des Vorzeichens. Der so ermittelte Wert für y wird in Formel (A) eingesetzt, woraus sich mit der Grenzbedingung $S > 0{,}74$ die Menge der besonders bevorzugten Verbindungen ergibt.

Die Substituenten I und J können folgende Bedeutungen haben:

| | | Inkrement |
|---|---|---|
| 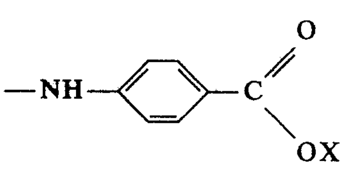 | mit $X = n\text{-}C_1-C_4$-Alkyl | 0,05 |

| | | Inkrement |
|---|---|---|
| 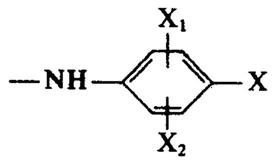 | mit X = n-$C_1-C_4$-Alkyl und $X_1 = X_2$ = H | −0,18 |
| | mit $X = X_1$ = n-$C_1-C_4$-Alkyl und $X_2$ = H | −0,26 |
| | mit X = verzweigtes $C_1-C_4$-Alkyl und $X_1 = X_2$ = H | −0,26 |
| $-NH_2$ | | 0,24 |
| 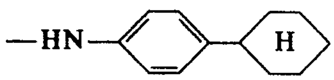 | | 0,24 |
| 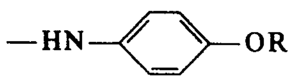 | mit R = n-$C_1-C_4$-Alkyl | −0,20 |
| —HN—R | mit R = n-$C_1-C_4$-Alkyl | −0,26 |
| | mit R = verzweigtes $C_1-C_4$-Alkyl | −0,31 |

Die Substituenten K können folgende Bedeutung haben, wobei bei den nachstehenden Substituenten X immer n-$C_1-C_4$-Alkyl bezeichnet.

| | Inkrement |
|---|---|
| 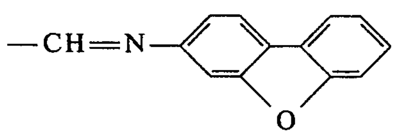 | 0,64 |
| 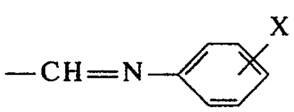 | 0,65 |
| 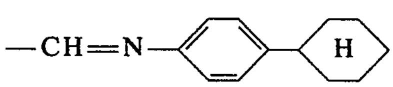 | 0,56 |
| 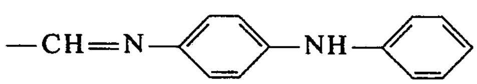 | 0,40 |
| 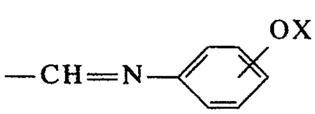 | 0,28 |
| 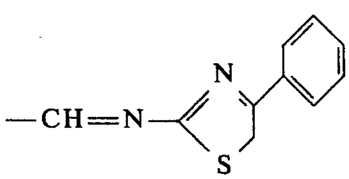 | 0,32 |
| 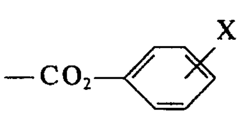 | 0,08 |
| 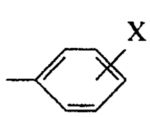 | 0,44 |

| | Inkrement |
|---|---|
| 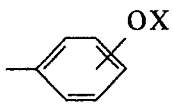 | 0,36 |
| 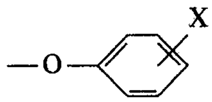 | 0,36 |
| 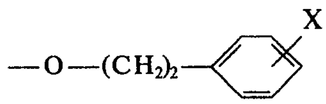 | 0,20 |
| 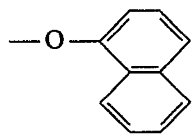 | 0,16 |
| —CHO | 0,20 |

Zur Erzielung eines hohen Ordnungsgrades ist es notwendig, die Farbstoffe von farbigen Begleitsubstanzen zu befreien. Dies geschieht optimal durch chromatographische Techniken, insbesondere durch Säulenchromatographie. Die reinen Verbindungen liefern im flüssigkristallinen Material gelöst rote bis blaue Farbtöne. Sie kennzeichnet ein hoher Ordnungsgrad, eine sehr gute Lichtechtheit und gute chemische Beständigkeit. Sie sind gut löslich.

Das flüssigkristalline Material kann beliebig gewählt werden, es muß jedoch den erfindungsgemäßen Farbstoff in ausreichender Menge aufnehmen können. Eine ausreichende Konzentration ist gegeben, wenn sich eine 0,1—10%ige Lösung, vzw. 0,5—2%ige Lösung in dem flüssigkristallinen Material herstellen läßt.

Von den verschiedenen Ordnungszuständen flüssigkristalliner Materialien sind die nematischen und cholesterinischen bevorzugt, entsprechend den Definitionen, wie sie beispielsweise bei R. Steinsträßer, L. Pohl; Angew. Chem. 85, 706 (1973) angegeben sind.

In feldlosem Zustand kann man zwei Orientierungen des flüssigkristallinen Materials unterscheiden, die von der Eigenschaft der Phasengrenze und damit von der Vorbehandlung der Glasplatten abhängen. Je nachdem, ob die lange Achse der Moleküle, aus denen die flüssigkristalline Phase besteht, senkrecht oder waagerecht zur Plattenoberfläche gerichtet ist, spricht man von homöotroper oder homogener Textur. Die Herstellungstechniken zur Erzeugung geeigneter Oberflächen sind bekannt (Ullmann Bd. XI S. 657 ff). Von den Dipoleigenschaften der flüssigkristallinen Verbindungen ist die dielektrische Anisotropie abhängig. Sie ist positiv, wenn das elektrische Feld eine homöotrope Ausrichtung bewirkt, negativ wenn sie homogen wird. Die Verwendung der erfindungsgemäßen Farbstoffe in flüssigkristallinen Materialien mit positiver dielektrischer Anisotropie ist bevorzugt. Als flüssigkristalline Materialien geeignet sind z. B. Gemische aus Alkylcyano-biphenylen, Alkoxycyano-biphenylen, Alkylcyano-terphenylen, Phenylcyclohexanen, Bicyclohexylen, Azoxyverbindungen, Schiffsche Basen, Benzoesäurephenylestern, Thiobenzoesäurephenylestern und Terpyrimidinen. Besonders hervorzuheben ist eine Mischung aus 51% 4'-n-Pentyl-4-cyano-biphenyl, 25% 4'-n-Heptyl-4-cyano-biphenyl, 16% 4'-n-Octyl-4-cyano-biphenyl und 8% 4'-n-Pentyl-4-cyano-terphenyl und eine Mischung aus ca. 24% trans-4-Heptyl(4-cyanophenyl)cyclohexan, 37% trans-4-Pentyl(4-cyanophenyl)cyclohexan, 26% trans-4-Propyl(4-cyanophenyl)cyclohexan und 12% trans-4-Pentyl-(4'-cyano-biphenyl)cyclohexan. Neben den flüssigkristallinen Verbindungen und dem Farbstoff kann das flüssigkristalline Material weitere übliche Zusätze enthalten, z. B. optisch aktive Verbindungen, die eine nematische Phase in eine cholesterinische umwandeln können oder Substanzen zur Verminderung der Schwellenspannung usw.

Beispiel 1a

Man destilliert aus einer Mischung von 160 g Phenol und 15 g Kaliumcarbonat 30 g Phenol ab, versetzt bei 120—130° C mit 20 g 1,5-Diamino-2,6-dibrom-4,8-(p-tosylamino)-anthrachinon und erhitzt 14 Stunden auf 160—170° C. Nach Abkühlen auf 100° C fällt man den Farbstoff durch Zugabe von Methanol aus, saugt den in schönen blauen Nadeln kristallisierten Farbstoff ab, wäscht mit Methanol und Wasser und erhält nach dem Trocknen 15,95 g = 77% d. Th. 1,5-Diamino-2,6-diphenoxy-4,8-di-(p-tosylamino)-anthrachinon.

8 g des in Beispiel 1a genannten Farbstoffes werden in 50 ml konz. Schwefelsäure 1 Std. bei 30° C gerührt und dann bei 15—20° C langsam mit 50 ml Wasser verdünnt. Man saugt das in Prismen kristallisierte Farbstoff-Sulfat ab, wäscht mit verd. Schwefelsäure und rührt bei 90° C mit Wasser unter Zusatz von Ammoniak aus. Nach Absaugen und Trocknen erhält man 3,81 g = 80% d. Th. des in blauen Prismen kristallisierten 1,4,5,8-Tetraamino-2,6-diphenoxy-anthrachinons, das in der nematischen Phase, bestehend aus einer Mischung von ca. 24% trans-4-Heptyl(4-cyanophenyl)cyclohexan, 37% trans-4-Pentyl(4-cyanophenyl)cyclohexan, 26% trans-4-Propyl(4-cyanophenyl)cyclohexan und 12% trans-4-Pentyl(4'-cyanobiphenyl)cyclohexan, einen Ordnungsgrad S von 0,80 aufweist.

Verwendet man in Beispiel 1a anstelle von Phenol entsprechend substituierte Phenole, so erhält man gemäß Beispiel 1b analog die in der Tabelle angegebenen Farbstoffe:

| Beispiel | Farbstoff | Ordnungsgrad S |
|---|---|---|
| 2 | 1,4,5,8-Tetraamino-2,6-(3-methylphenoxy)-anthrachinon | 0,81 |
| 3 | 1,4,5,8-Tetraamino-2,6-(4-tert.-butylphenoxy)-anthrachinon | 0,80 |
| 4 | 1,4,5,8-Tetraamino-2,6-(4-isooctylphenoxy)-anthrachinon | 0,77 |
| 5 | 1,4,5,8-Tetraamino-2,6-(4-cyclohexylphenoxy)-anthrachinon | 0,77 |
| 6 | 1,4,5,8-Tetraamino-2,6-(2-methoxyphenoxy)-anthrachinon | 0,80 |
| 7 | 1,4,5,8-Tetraamino-2,6-(4-n-butoxyphenoxy)-anthrachinon | 0,80 |
| 8 | 1,4,5,8-Tertraamino-2,6-(4-β-hydroxyethoxyphenoxy)-anthrachinon | 0,79 |
| 9 | 1,4,5,8-Tetraamino-2,6-(4-chlorphenoxy)-anthrachinon | 0,80 |
| 10 | 1,4,5,8-Tetraamino-2,6-(3-bromphenoxy)-anthrachinon | 0,81 |

Beispiel 11

In eine trocken destillierte Mischung aus 150 g Phenol und 15 g Kaliumcarbonat trägt man bei 120—130° C 20 g 1,4,5,8-Tetra-(4-cyclohexylphenylamino)-2,6-dibromanthrachinon ein und erhitzt so lange auf 170—175° C, bis die Bildung des neuen Farbstoffs dünnschichtchromatographisch beendet ist. Nach Zugabe von Methanol und Abkühlen saugt man den in blauen Prismen auskristallisierten Farbstoff ab, wäscht mit Methanol und Wasser und erhält nach dem Trocknen 21,2 g = 71% d. Th. 1,4,5,8-Tetra-(4-cyclohexylphenylamino)-2,6-diphenoxy-anthrachinon, das in der nematischen Phase wie in Beispiel 1b einen Ordnungsgrad S von 0,77 aufweist.

Verwendet man in Beispiel 11 an Stelle von Phenol die entsprechend substituierten Phenole, so erhält man analog die in der Tabelle angegebenen Farbstoffe:

| Beispiel | Farbstoff | Ordnungsgrad S |
|---|---|---|
| 12 | 1,4,5,8-Tetra-(4-cyclohexylphenylamino)-2,6-di-(4-methylphenoxy-anthrachinon) | 0,81 |
| 13 | 1,4,5,8-Tetra-(4-cyclohexylphenylamino)-2,6-di-(4-tert.butyl(phenoxy)-anthrachinon | 0,80 |
| 14 | 1,4,5,8-Tetra-(4-cyclohexylphenylamino)-2,6-di-(3-methoxyphenoxy)-anthrachinon | 0,80 |

Beispiel 15

Verfährt man analog Beispiel 11 in einer Mischung aus 150 g Phenol und 15 g Kaliumcarbonat mit 20 g 1,5-Di-(p-toluidino)-4,8-di-(4-cyclohexylphenylamino)-2,6-dibromanthrachinon, so erhält man 14 g = 68% d. Th. des in blauen Prismen kristallisierten 1,5-Di-(p-toluidino)-4,8-di-(p-cyclohexylphenylamino)-2,6-diphenoxy-anthrachinons, das in der nematischen Phase wie in Beispiel 1b einen Ordnungsgrad S von 0,74 aufweist.

Verwendet man in Beispiel 15 anstelle von Phenol entsprechend substituierte Phenole, so erhält man analog die in der Tabelle angegebenen Farbstoffe:

| Beispiel | Farbstoff | Ordnungsgrad S |
|---|---|---|
| 16 | 1,5-Di-(p-toluidino)-4,8-di-(4-cyclohexylphenylamino)-2,6-di-(4-tert.butylphenoxy)-anthrachinon | 0,75 |
| 17 | 1,5-Di-(p-toluidino)-4,8-di-(4-cyclohexylphenylamino)-2,6-di-(4-n-propoxyphenoxy)-anthrachinon | 0,75 |
| 18 | 1,5-Di-(p-toluidino)-4,8-(cyclohexylphenylamino)-2,6-di-(2-chloroxy)-anthrachinon | 0,77 |

## Beispiel 19a

Eine Paste von 22 g 1,5-Diamino-anthrachinon in 1500 ml Wasser und 65 ml 45%iger Natronlauge wird bei 40° C mit 45 g Natriumdithionit verküpt. Man versetzt dann mit 22 ml 37%igem Formaldehyd, heizt in etwa 30 Min. auf 70—80° C und bläst die Küpe mit Luft aus. Man saugt das ausgefallene Produkt heiß ab und erhält nach dem Trocknen 23,4 g = 95% d. Th. rohes 1,5-Diamino-2,6-dimethyl-anthrachinon, das durch Umkristallisieren aus einem Lösungsmittel wie Anilin oder o-Dichlorbenzol gereinigt werden kann.

## Beispiel 19b

100 g 1,5-Diamino-2,6-dimethyl-anthrachinon werden in 500 ml Schwefelsäure-Monohydrat und 53 ml 20%igem Oleum gelöst und bei 10—15° C mit 40 g Paraformaldehyd versetzt. Man rührt 1 Std. nach, versetzt dann bei 0—5° C mit einem Gemisch aus 53,5 g Salpetersäure und 108,5 g Schwefelsäure und rührt so lange, bis die Dinitrierung dünnschichtchromatographisch beendet ist. Darauf gibt man die Schmelze auf 3 kg Eis, saugt ab und wäscht mit Wasser neutral. Man bringt die erhaltene neutrale Paste mit Wasser auf ein Volumen von 5000 ml, versetzt mit einer Lösung von 2 kg Natriumsulfid-monohydrat in 2000 ml Wasser, erwärmt in 1 Std. auf 95° C und hält 1 Std. bei 95° C. Darauf saugt man das blaue amorphe Produkt ab, wäscht mit heißem Wasser nach und erhält nach dem Trocknen 75,6 g = 68% d. Th. 1,4,5,8-Tetraamino-2,6-dimethyl-anthrachinon, das beim Umkristallisieren aus Anilin blaue Nadeln liefert.

## Beispiel 19c

50 g 1,4,5,8-Tetraamino-2,6-dimethyl-anthrachinon, 25 g Kaliumcarbonat, 10 ml Anilin und 350 ml Nitrobenzol werden so lange zum Sieden erhitzt, bis die Bildung des Dialdehydanils dünnschichtchromatographisch beendet ist. Man klärt die Schmelze bei 160° C und läßt erkalten. Man saugt das in blauen Prismen auskristallisierte Produkt ab, wäscht mit Methanol und erhält nach dem Trocknen 44 g = 55% d. Th. 1,4,5,8-Tetraamino-anthrachinon-2,6-di-(aldehydanil), das in der nematischen Phase wie in Beispiel 1 einen Ordnungsgrad S von 0,74 aufweist.

Durch Verseifen des Dialdehydanils mit konz. Schwefelsäure erhält man in üblicher Weise den 1,4,5,8-Tetraamino-anthrachinon-2,6-dialdehyd.

## Beispiel 20

10 g 1,4,5,8-Tetraamino-anthrachinon-2,6-dialdehyd, 100 ml Eisessig und 8,7 g p-Toluidin werden 1 Std. zum Sieden erhitzt. Man saugt nach dem Erkalten das in blauen Prismen kristallisierte Produkt ab, wäscht mit Methanol und erhält nach dem Trocknen 10,1 g = 65% d. Th. 1,4,5,8-Tetraamino-anthrachinon-2-6-di-(aldehyd-4-methylanil), das in der nematischen Phase wie in Beispiel 1 einen Ordnungsgrad S von 0,82 aufweist.

Verwendet man in Beispiel 20 anstelle von p-Toluidin entsprechend substituierte Aniline, so erhält man analog die in der Tabelle angegebenen Farbstoffe:

| Beispiel | Farbstoff | Ordnungsgrad S |
|---|---|---|
| 21 | 1,4,5,8-Tetraamino-anthrachinon-2,6-di-(aldehyd-4-cyclohexylanil) | 0,81 |
| 22 | 1,4,5,8-Tetraamino-anthrachinon-2,6-di-(aldehyd-4-tert.butylanil) | 0,78 |
| 23 | 1,4,5,8-Tetraamino-anthrachinon-2,6-di-(aldehyd-2-methyl-4-tert.butylanil) | 0,75 |
| 24 | 1,4,5,8-Tetraamino-anthrachinon-2,6-di-(aldehyd-4-isooctylanil) | 0,77 |
| 25 | 1,4,5,8-Tetraamino-anthrachinon-2,6-di-(aldehyd-3-methoxyanil) | 0,78 |
| 26 | 1,4,5,8-Tetraamino-anthrachinon-2,6-di-(aldehyd-4-$\beta$-hydroxyethoxy-anil) | 0,74 |
| 27 | 1,4,5,8-Tetraamino-anthrachinon-2,6-di-(aldehyd-2-chloranil) | 0,79 |
| 28 | 1,4,5,8-Tetraamino-anthrachinon-2,6-di-(aldehyd-2,6-dimethyl-4-ethyl-anil) | 0,81 |

## Beispiel 29

10 g 1,5-Diamino-4,8-di-(4-cyclohexylphenylamino)-anthrachinon-2,6-dialdehyd, 100 ml Eisessig und 6 g 4-Ethylanilin werden 1 Std. zum Sieden erhitzt. Nach dem Erkalten saugt man das in blauen Nädelchen kristallisierte Produkt ab, wäscht mit Methanol und erhält nach dem Trocknen 10,8 g = 76% d. Th. 1,5-Diamino-4,8-di-(4-cyclohexylphenylamino)-anthrachinon-2,6-di(aldehyd-4-ethylanilin), das in der nematischen Phase wie in Beispiel 1 einen Ordnungsgrad S von 0,81 aufweist.

## Beispiel 30a

20 g 1,5-Diamino-2,6-dibrom-4,8-di(p-tosylamino)-anthrachinon, 4,5 g Kaliumcarbonat und 6,6 g Thiophenol werden in 125 ml Dimethylformamid 3 Stunden auf 120—125°C erhitzt. Nach dem Abkühlen saugt man das in schönen blauen Nadeln kristallisierte Produkt ab, wäscht mit Dimethylformamid und Methanol, rührt mit Wasser aus und erhält nach dem Trocknen 19,5 g = 90% d. Th. 1,5-Diamino2,6-di-(phenylthio)-4,8-di-(p-tosylamino)-anthrachinon.

## Beispiel 30b

11 g des in Beispiel 30a erhaltenen Produktes werden 1 Stunde in 80 ml konz. Schwefelsäure bei 30—35°C gerührt. Man tropft dann bei 15—20°C langsam 20 ml Wasser zu, saugt das in orangefarbenen Prismen auskristallisierte Produkt ab, wäscht mit etwas 80%iger Schwefelsäure und verrührt das Produkt mit ammoniakhaltigem heißen Wasser. Man saugt das in blauen Prismen kristallisierte Produkt heiß ab, wäscht mit heißem Wasser und erhält nach dem Trocknen 5,7 g = 85% d. Th. 1,4,5,8-Tetraamino-2,6-di-(phenylthio)-anthrachinon, das in die nematische Phase aus Beispiel 1 eingesetzt wird. Verwendet man in Beispiel 30a anstelle des dort eingesetzten Thiophenols entsprechend substituierte Thiophenole, so erhält man nach Verseifung der gewonnen Zwischenprodukte gemäß Beispiel 30b die in der Tabelle angegebenen Farbstoffe:

| Beispiel | Farbstoff |
|---|---|
| 31 | 1,4,5,8-Tetraamino-2,6-di-(4-methylphenylthio)-anthrachinon |
| 32 | 1,4,5,8-Tetraamino-2,6-di-(4-tert.butylphenylthio)-anthrachinon |
| 33 | 1,4,5,8-Tetraamino-2,6-di-(4-chlorphenylthio)-anthrachinon |
| 34 | 1,4,5,8-Tetraamino-2,6-di-(3-methoxyphenylthio)-anthrachinon |

Beispiel 35a

20 g 1,5-Diamino-2,6-dibrom-4,8-di-(p-tosylamino)-anthrachinon, 4,5 g Kaliumcarbonat und 10 g 2-Mercaptobenzthiazol werden in 150 ml Dimethylformamid 3 Stunden auf 125—130°C erhitzt. Nach dem Abkühlen saugt man das in blauen Prismen auskristallisierte Produkt ab, wäscht mit Dimethylformamid und Methanol, rührt mit Wasser aus und erhält nach dem Trocknen 22,7 g = 92% d. Th. 1,5-Diamino-2,6-di-(2-benzthiazolylthio)-4,8-di-(p-tosylamino)-anthrachinon.

Beispiel 35b

15 g des in Beispiel 30a erhaltenen Produktes werden 1 Stunde in 120 ml konz. Schwefelsäure bei 30—35°C gerührt. Man tropft dann bei 15—20°C langsam 30 ml Wasser zu, saugt das in Prismen ausgefallenen Produkt ab, wäscht mit etwas 80%iger Schwefelsäure und verrührt das Produkt mit ammoniakhaltigem heißen Wasser. Man saugt das in blauen Prismen kristallisierte Produkt heiß ab, wäscht mit heißem Wasser und erhält nach dem Trocknen 10,8 g = 82% d. Th. 1,4,5,8-Tetraamino-2,6-di-(2-benzthiazolylthio)-anthrachinon, das in die nematische Phase gemäß Beispiel 1 eingesetzt wird.

Analog zu den vorstehend beschriebenen Beispielen lassen sich auch die in den nachfolgenden Tabellen aufgeführten Farbstoffe darstellen.

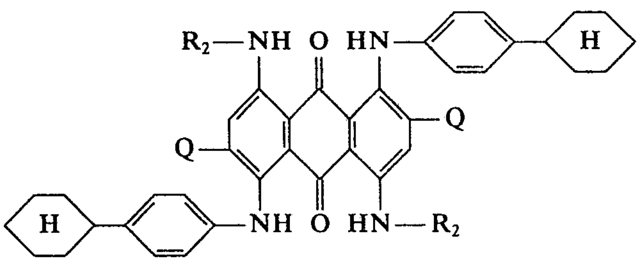

| $R_2$ | Q | Ordnungsgrad S |
|---|---|---|
| 4-Cyclohexylphenyl | N-(4-Methylphenyl)-formimidoyl | 0,82 |
| 4-Cyclohexylphenyl | N-(4-Dibenzofuranyl-2)-formimidoyl | 0,82 |
| 4-Cyclohexylphenyl | N-(4-Cyclohexylphenyl)-formimidoyl | 0,81 |
| 4-Cyclohexylphenyl | Phenyl | 0,80 |
| 4-Cyclohexylphenyl | N-(4-Phenylamino-phenyl)-formimidoyl | 0,80 |
| 4-Cyclohexylphenyl | N-(4-Methoxyphenyl) | 0,79 |
| 4-Cyclohexylphenyl | N-(4-Phenyl-thiazolyl-2)-formimidoyl | 0,79 |
| 4-Cyclohexylphenyl | N-(4-Methoxyphenyl)-formimidoyl | 0,78 |
| 4-Cyclohexylphenyl | Phenethyloxy | 0,78 |

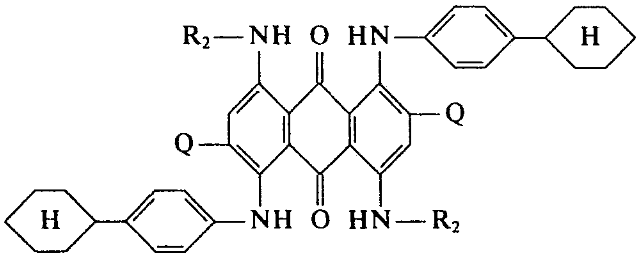

| R2 | Q | Ordnungsgrad S |
|---|---|---|
| 4-Cyclohexylphenyl | Formyl | 0,77 |
| 4-Cyclohexylphenyl | 1-Naphthyloxy | 0,77 |
| 4-Cyclohexylphenyl | Phenoxycarbonyl | 0,76 |
| Amino | N-(4-Methylphenyl)-formimidoyl | 0,82 |
| Amino | N-(Dibenzofuranyl-2)-formimidoyl | 0,82 |
| Amino | N-(4-Cyclohexylphenyl)-formimidoyl | 0,81 |
| Amino | Phenyl | 0,80 |
| Amino | N-(4-Phenylaminophenyl)-formimidoyl | 0,80 |
| Amino | 4-Methoxyphenyl | 0,79 |
| Amino | N-(4-Phenylthiazolyl-2)-formimidoyl | 0,79 |
| Amino | N-(4-Methoxyphenyl)-formimidoyl | 0,78 |

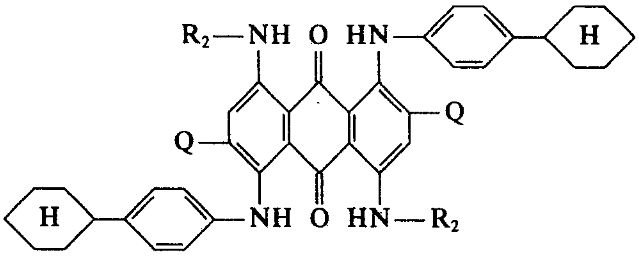

| R2 | Q | Ordnungsgrad S |
|---|---|---|
| Amino | Phenethyloxy | 0,78 |
| Amino | Formyl | 0,77 |
| Amino | 1-Naphthyloxy | 0,77 |
| Amino | Phenoxycarbonyl | 0,76 |
| 4-Ethoxycarbonylphenyl | N-(4-Methylphenyl)-formimidoyl | 0,80 |
| 4-Ethoxycarbonylphenyl | N-(Dibenzofuranyl-2)-formimidoyl | 0,80 |
| 4-Ethoxycarbonylphenyl | N-(4-Cyclohexylphenyl)-formimidoyl | 0,79 |
| 4-Ethoxycarbonylphenyl | Phenyl | 0,78 |
| 4-Ethoxycarbonylphenyl | N-(4-Phenylaminophenyl)-formimidoyl | 0,78 |
| 4-Ethoxycarbonylphenyl | 4-Methoxyphenyl | 0,77 |
| 4-Ethoxycarbonylphenyl | N-(4-Phenyl-thiazolyl-2)-formimidoyl | 0,76 |
| 4-Ethoxycarbonylphenyl | N-(4-Methoxyphenyl)-formimidoyl | 0,75 |

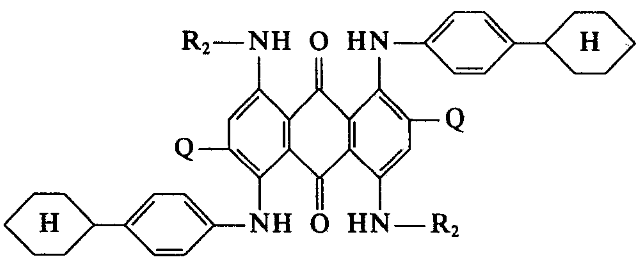

| R2 | Q | Ordnungsgrad S |
|---|---|---|
| 4-Methylphenyl | N-(4-Methylphenyl)-formimidoyl | 0,78 |
| 4-Methylphenyl | N-(Dibenzofuranyl-2)-formimidoyl | 0,78 |
| 4-Methylphenyl | N-(4-Cyclohexylphenyl)-formimidoyl | 0,77 |
| 4-Methylphenyl | Phenyl | 0,75 |
| 4-Ethylphenyl | N-(4-Methylphenyl)-formimidoyl | 0,78 |
| 4-Ethylphenyl | N-(Dibenzofuranyl-2)-formimidoyl | 0,78 |
| 4-Ethylphenyl | N-(4-Cyclohexylphenyl)-formimidoyl | 0,77 |
| Dimethylphenyl | N-(4-Methylphenyl)-formimidoyl | 0,78 |
| Dimethylphenyl | N-(Dibenzofuranyl-2)-formimidoyl | 0,78 |

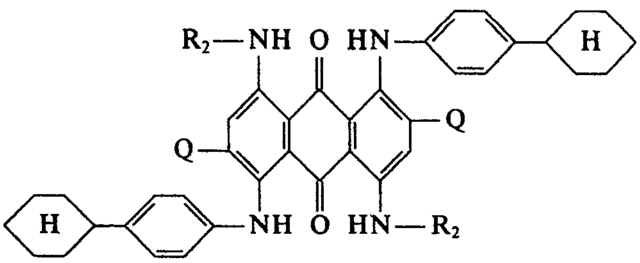

| $R_2$ | Q | Ordnungsgrad S |
|---|---|---|
| Dimethylphenyl | N-(4-Cyclohexylphenyl)-formimidoyl | 0,76 |
| 4-Methoxyphenyl | N-(4-Methylphenyl)-formimidoyl | 0,77 |
| 4-Methoxyphenyl | N-(Dibenzofuranyl-2)-formimidoyl | 0,77 |
| 4-Methoxyphenyl | N-(4-Cyclohexylphenyl)-formimidoyl | 0,76 |
| 2,6-Diethyl-4-methylphenyl | N-(4-Methylphenyl)-formimidoyl | 0,77 |
| 2,6-Diethyl-4-methylphenyl | N-(Dibenzofuranyl-2)-formimidoyl | 0,77 |
| 2,6-Diethyl-4-methylphenyl | N-(4-Cyclohexylphenyl)-formimidoyl | 0,75 |
| 4-t.-Butylphenyl | N-(4-Methylphenyl)-formimidoyl | 0,77 |
| 4-t.-Butylphenyl | N-(Dibenzofuranyl-2)-formimidoyl | 0,77 |

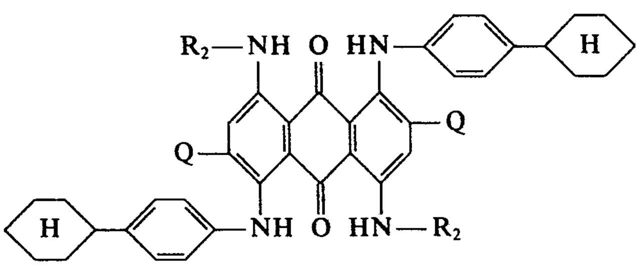

| $R_2$ | Q | Ordnungsgrad S |
|---|---|---|
| 4-t.-Butylphenyl | N-(4-Cyclohexylphenyl)-formimidoyl | 0,75 |
| Methyl | N-(4-Methylphenyl)-formimidoyl | 0,76 |
| Methyl | N-(Dibenzofuranyl-2)-formimidoyl | 0,76 |
| Methyl | N-(4-Cyclohexylphenyl)-formimidoyl | 0,75 |
| i-Butyl | N-(4-Methylphenyl)-formimidoyl | 0,76 |
| i-Butyl | N-(Dibenzofuranyl-2)-formimidoyl | 0,76 |

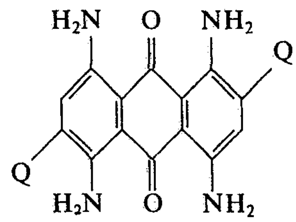

| Q | Ordnungsgrad S |
|---|---|
| N-(4-Methylphenyl)-formimidoyl | 0,82 |
| N-(Dibenzofuranyl-2)-formimidoyl | 0,82 |
| N-(4-Cyclohexylphenyl)-formimidoyl | 0,81 |
| Phenyl | 0,80 |
| N-(4-Phenylamino-phenyl)-formimidoyl | 0,80 |
| 4-Methoxyphenyl | 0,79 |
| N-(4-Phenyl-thiazolyl-2)-formimidoyl | 0,79 |
| N-(4-Methoxyphenyl)-formimidoyl | 0,78 |
| Phenethyloxy | 0,78 |
| Formyl | 0,77 |
| 1-Naphthyloxy | 0,77 |
| Phenoxycarbonyl | 0,76 |

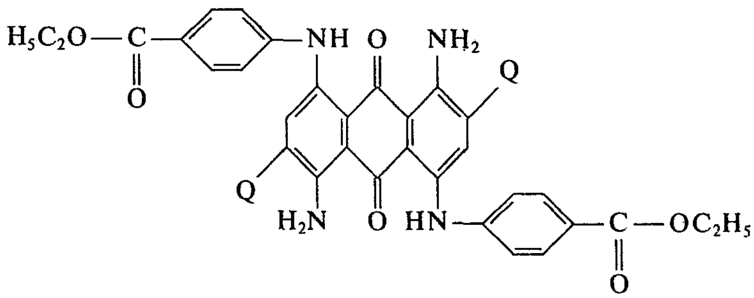

| Q | Ordnungsgrad S |
|---|---|
| N-(4-Methylphenyl)-formimidoyl | 0,80 |
| N-(Dibenzofuranyl-2)-formimidoyl | 0,80 |
| N-(4-Cyclohexylphenyl)-formimidoyl | 0,79 |
| Phenyl | 0,78 |
| N-(4-Phenylamino-phenyl)-formimidoyl | 0,78 |
| 4-Methoxyphenyl | 0,77 |
| N-(4-Phenyl-thiazolyl-2)-formimidoyl | 0,76 |
| N-(4-Methoxyphenyl)-formimidoyl | 0,75 |

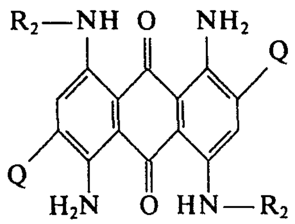

| $R_2$ | Q | Ordnungsgrad S |
|---|---|---|
| 4-Methylphenyl | N-(4-Methylphenyl)-formimidoyl | 0,78 |
| 4-Methylphenyl | N-(Dibenzofuranyl-2)-formimidoyl | 0,78 |
| 4-Methylphenyl | N-(4-Cyclohexylphenyl)-formimidoyl | 0,77 |
| 4-Ethylphenyl | N-(4-Methylphenyl)-formimidoyl | 0,78 |
| 4-Ethylphenyl | N-(Dibenzofuranyl-2)-formimidoyl | 0,78 |
| 4-Ethylphenyl | N-(4-Cyclohexylphenyl)-formimidoyl | 0,76 |
| Dimethylphenyl | N-(4-Methylphenyl)-formimidoyl | 0,77 |
| Dimethylphenyl | N-(Dibenzofuranyl-2)-formimidoyl | 0,77 |
| Dimethylphenyl | N-(4-Cyclohexylphenyl)-formimidoyl | 0,76 |

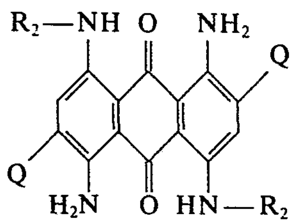

| $R_2$ | Q | Ordnungsgrad S |
|---|---|---|
| 4-Methoxyphenyl | N-(4-Methylphenyl)-formimidoyl | 0,77 |
| 4-Methoxyphenyl | N-(Dibenzofuranyl-2)-formimidoyl | 0,77 |
| 4-Methoxyphenyl | N-(4-Cyclohexylphenyl-)-formimidoyl | 0,76 |
| 2,6-Diethyl-4-methylphenyl | N-(4-Methylphenyl)-formimidoyl | 0,76 |
| 2,6-Diethyl-4-methylphenyl | N-(Dibenzofuranyl-2)-formimidoyl | 0,76 |
| 2,6-Diethyl-4-methylphenyl | N-(4-Cyclohexylphenyl)-formimidoyl | 0,75 |
| 4-t.-Butylphenyl | N-(4-Methylphenyl)-formimidoyl | 0,76 |
| 4-t.-Butylphenyl | N-(Dibenzofuranyl-2)-formimidoyl | 0,76 |
| 4-t.-Butylphenyl | N-(4-Cyclohexylphenyl)-formimidoyl | 0,75 |
| Methyl | N-(4-Methylphenyl)-formimidoyl | 0,76 |
| Methyl | N-(Dibenzofuranyl-2)-formimidoyl | 0,76 |
| i-Butyl | N-(4-Methylphenyl)-formimidoyl | 0,76 |
| i-Butyl | N-(Dibenzofuranyl-2)-formimidoyl | 0,76 |

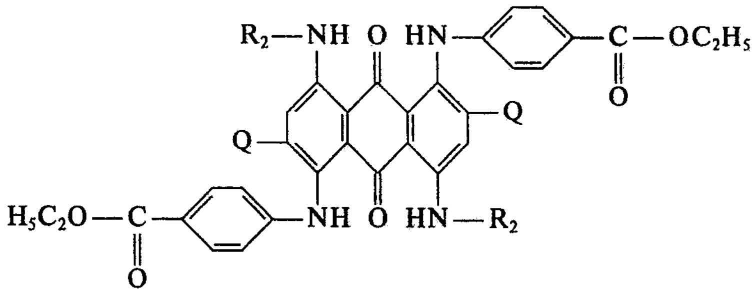

| R2 | Q | Ordnungsgrad S |
|---|---|---|
| 4-Ethoxycarbonylphenyl | N-(4-Methylphenyl)-formimidoyl | 0,78 |
| 4-Ethoxycarbonylphenyl | N-(Dibenzofuranyl-2)-formimidoyl | 0,78 |
| 4-Ethoxycarbonylphenyl | N-(4-Cyclohexylphenyl)-formimidoyl | 0,77 |
| 4-Methylphenyl | N-(4-Methylphenyl)-formimidoyl | 0,75 |
| 4-Methylphenyl | N-(Dibenzofuranyl)-formimidoyl | 0,75 |

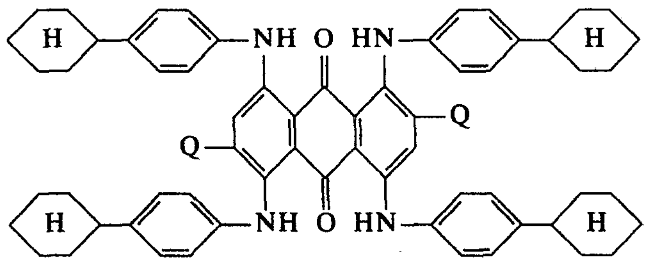

| Q | Ordnungsgrad S |
|---|---|
| 2-Chlor-phenoxy | 0,81 |
| 4-Methyl-phenoxy | 0,81 |
| 2-Ethoxy-phenoxy | 0,81 |
| 4-Methoxy-phenoxy | 0,81 |
| 4-(β-Cyanethyl)-phenoxy | 0,81 |
| 3-Chlor-phenoxy | 0,81 |
| 4-Phenyl-phenoxy | 0,81 |
| 3-Methyl-phenoxy | 0,81 |
| 4-Chlor-phenoxy | 0,80 |
| p-(2-Phenyl-propyl-2)-phenoxy | 0,80 |
| 2-Methyl-phenoxy | 0,80 |
| 2-Methoxy-phenoxy | 0,80 |
| 4-Methylthio-phenoxy | 0,80 |
| 4-t.-Butyl-phenoxy | 0,80 |
| 3-Methoxy-phenoxy | 0,80 |
| Phenoxy | 0,79 |
| 4-(4'-Hydroxyphenyl-aminosulfonyl)-phenoxy | 0,79 |
| 2-Ethyl-phenoxy | 0,79 |
| 4-Hydroxy-phenoxy | 0,78 |
| 3-Cyan-phenoxy | 0,78 |
| 4-Phenylthio-phenoxy | 0,78 |
| 1,1,3,3-Tetramethylbutyl-(1)-phenoxy | 0,77 |
| Cyclohexyl-phenoxy | 0,77 |
| 4-Phenylaminosulfonyl-phenoxy | 0,77 |
| 2-Chlorphenoxysulfonyl | 0,75 |

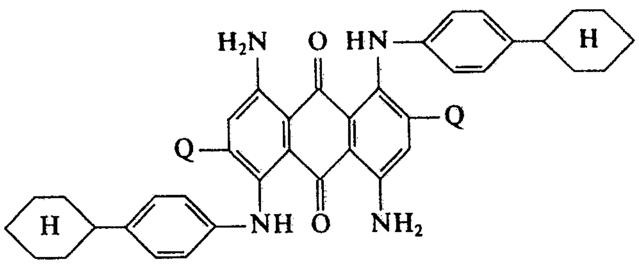

| Q | Ordnungsgrad S |
|---|---|
| 2-Chlor-phenoxy | 0,81 |
| 4-Methyl-phenoxy | 0,81 |
| 2-Ethoxy-phenoxy | 0,81 |
| 4-Methoxy-phenoxy | 0,81 |
| 4-($\beta$-Cyanethyl)-phenoxy | 0,81 |
| 3-Chlor-phenoxy | 0,81 |
| 4-Phenyl-phenoxy | 0,81 |
| 3-Methyl-phenoxy | 0,81 |
| 4-Chlor-phenoxy | 0,80 |
| p-(2-Phenyl-propyl-2)-phenoxy | 0,80 |
| 2-Methyl-phenoxy | 0,80 |
| 2-Methoxy-phenoxy | 0,80 |
| 4-Methylthio-phenoxy | 0,80 |
| 4-t.-Butyl-phenoxy | 0,80 |
| 3-Methoxy-phenoxy | 0,80 |
| Phenoxy | 0,79 |
| 4-(4'-Hydroxyphenyl-aminosulfonyl)-phenoxy | 0,79 |
| 2-Ethyl-phenoxy | 0,79 |
| 4-Hydroxy-phenoxy | 0,78 |
| 3-Cyan-phenoxy | 0,78 |
| 4-Phenylthio-phenoxy | 0,78 |
| 1,1,3,3-Tetramethylbutyl-(1)-phenoxy | 0,77 |
| 4-Cyclohexyl-phenoxy | 0,77 |
| 4-Phenylaminosulfonyl-phenoxy | 0,77 |
| 2-Chlorphenoxysulfonyl | 0,75 |

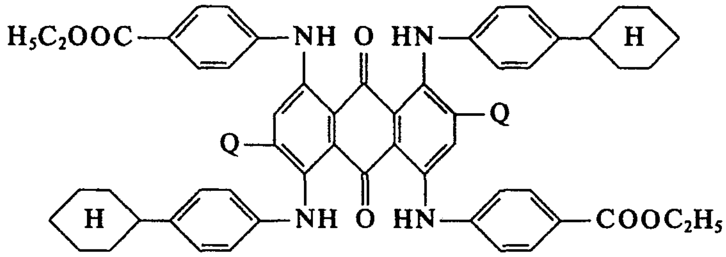

| Q | Ordnungsgrad S |
|---|---|
| 2-Chlor-phenoxy | 0,80 |
| 4-Methyl-phenoxy | 0,79 |
| 2-Ethoxy-phenoxy | 0,79 |
| 4-Methoxy-phenoxy | 0,79 |
| 4-(β-Cyanethyl)-phenoxy | 0,79 |
| 3-Chlor-phenoxy | 0,79 |
| 4-Phenyl-phenoxy | 0,79 |
| 3-Methyl-phenoxy | 0,79 |
| 4-Chlor-phenoxy | 0,78 |
| p-(2-Phenyl-propyl-2)-phenoxy | 0,78 |
| 2-Methyl-phenoxy | 0,78 |
| 2-Methoxy-phenoxy | 0,78 |
| 4-Methylthio-phenoxy | 0,78 |
| 4-t.-Butyl-phenoxy | 0,78 |
| 3-Methoxy-phenoxy | 0,78 |
| Phenoxy | 0,77 |
| 4-(4'-Hydroxyphenyl-aminosulfonyl)-phenoxy | 0,77 |
| 2-Ethyl-phenoxy | 0,76 |
| 4-Hydroxy-phenoxy | 0,76 |
| 3-Cyan-phenoxy | 0,76 |
| 4-Phenylthio-phenoxy | 0,76 |

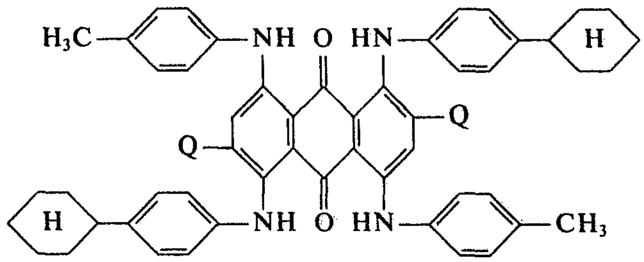

| Q | Ordnungsgrad S |
|---|---|
| 2-Chlor-phenoxy | 0,77 |
| 4-Methyl-phenoxy | 0,76 |
| 2-Ethoxy-phenoxy | 0,76 |
| 4-Methoxy-phenoxy | 0,76 |
| 4-(β-Cyanethyl)-phenoxy | 0,76 |
| 3-Chlor-phenoxy | 0,76 |
| 4-Phenyl-phenoxy | 0,76 |
| 3-Methyl-phenoxy | 0,76 |
| 4-Chlor-phenoxy | 0,76 |
| p-(2-Phenyl-propyl-2)-phenoxy | 0,75 |

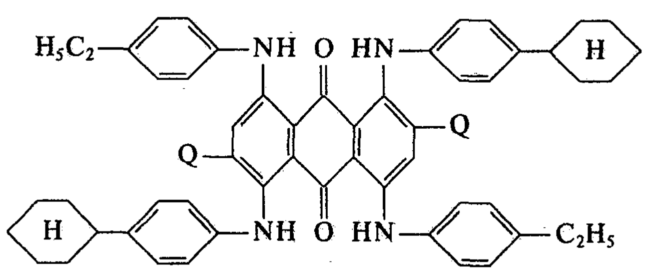

| Q | Ordnungsgrad S |
|---|---|
| 2-Chlor-phenoxy | 0,77 |
| 4-Methyl-phenoxy | 0,76 |
| 2-Ethoxy-phenoxy | 0,76 |
| 4-Methoxy-phenoxy | 0,76 |
| 4-(β-Cyanethyl)-phenoxy | 0,76 |
| 3-Chlor-phenoxy | 0,75 |
| 4-Phenyl-phenoxy | 0,75 |
| 3-Methyl-phenoxy | 0,75 |
| 4-Chlor-phenoxy | 0,75 |

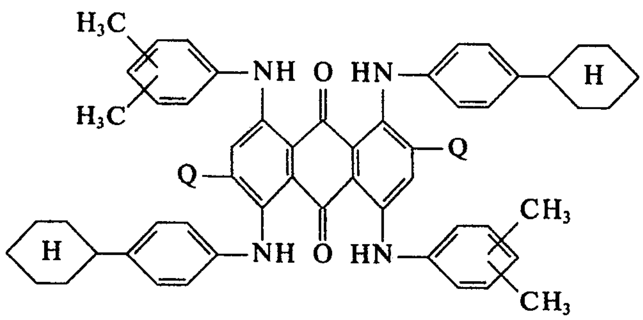

| Q | Ordnungsgrad S |
|---|---|
| 2-Chlor-phenoxy | 0,77 |
| 4-Methyl-phenoxy | 0,76 |
| 2-Ethoxy-phenoxy | 0,75 |
| 4-Methoxy-phenoxy | 0,75 |
| 4-(β-Cyanethyl)-phenoxy | 0,75 |
| 3-Chlor-phenoxy | 0,75 |
| 4-Phenyl-phenoxy | 0,75 |
| 3-Methyl-phenoxy | 0,75 |

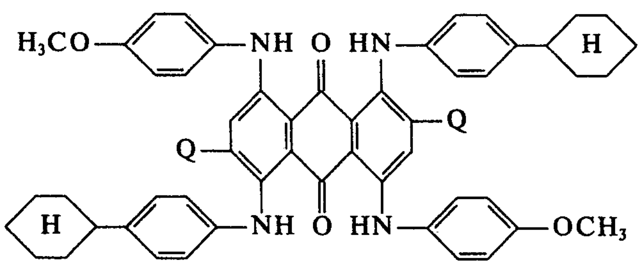

| Q | Ordnungsgrad S |
|---|---|
| 2-Chlor-phenoxy | 0,77 |
| 4-Methyl-phenoxy | 0,75 |
| 2-Ethoxy-phenoxy | 0,75 |
| 4-Methoxy-phenoxy | 0,75 |
| 4-(β-Cyanethyl)-phenoxy | 0,75 |
| 3-Chlor-phenoxy | 0,75 |
| 4-Phenyl-phenoxy | 0,75 |

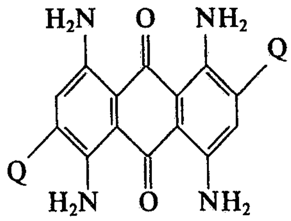

| Q | Ordnungsgrad S |
|---|---|
| 2-Chlor-phenoxy | 0,81 |
| 4-Methyl-phenoxy | 0,81 |
| 2-Ethoxy-phenoxy | 0,81 |
| 4-Methoxy-phenoxy | 0,81 |
| 4-($\beta$-Cyanethyl)-phenoxy | 0,81 |
| 3-Chlor-phenoxy | 0,81 |
| 4-Phenyl-phenoxy | 0,81 |
| 3-Methyl-phenoxy | 0,81 |
| 4-Chlor-phenoxy | 0,80 |
| p-(2-Phenylpropyl-2)-phenoxy | 0,80 |
| 2-Methyl-phenoxy | 0,80 |
| 2-Methoxy-phenoxy | 0,80 |
| 4-Methylthio-phenoxy | 0,80 |
| 4-t.-Butyl-phenoxy | 0,80 |
| 3-Methoxy-phenoxy | 0,80 |
| Phenoxy | 0,79 |
| 4-(4′-Hydroxyphenyl-aminosulfonyl)-phenoxy | 0,79 |
| 2-Ethyl-phenoxy | 0,79 |
| 4-Hydroxy-phenoxy | 0,78 |
| 3-Cyan-phenoxy | 0,78 |
| 4-Phenylthio-phenoxy | 0,78 |
| 1,1,3,3-Tetramethylbutyl-(1)-phenoxy | 0,77 |
| 4-Cyclohexyl-phenoxy | 0,77 |
| 4-Phenylaminosulfonyl-phenoxy | 0,77 |
| 2-Chlorphenoxy-sulfonyl | 0,75 |

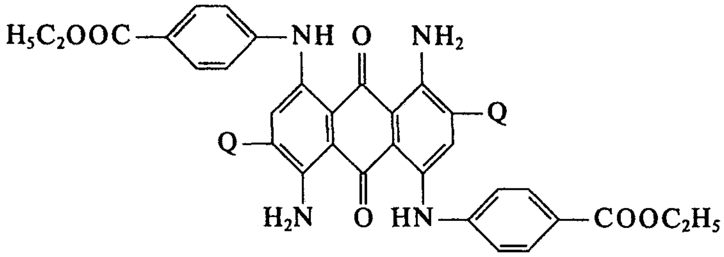

| Q | Ordnungsgrad S |
|---|---|
| 2-Chlor-phenoxy | 0,80 |
| 4-Methyl-phenoxy | 0,79 |
| 2-Ethoxy-phenoxy | 0,79 |
| 4-Methoxy-phenoxy | 0,79 |
| 4-(β-Cyanethyl)-phenoxy | 0,79 |
| 3-Chlor-phenoxy | 0,79 |
| 4-Phenyl-phenoxy | 0,79 |
| 3-Methyl-phenoxy | 0,79 |
| 4-Chlor-phenoxy | 0,78 |
| p-(2-Phenylpropyl-2)-phenoxy | 0,78 |
| 2-Methyl-phenoxy | 0,78 |
| 2-Methoxy-phenoxy | 0,78 |
| 4-Methylthio-phenoxy | 0,78 |
| 4-t.-Butyl-phenoxy | 0,78 |
| 3-Methoxy-phenoxy | 0,78 |
| Phenoxy | 0,77 |
| 4-(4'-Hydroxyphenyl-aminosulfonyl)-phenoxy | 0,77 |
| 2-Ethyl-phenoxy | 0,76 |
| 4-Hydroxy-phenoxy | 0,76 |
| 3-Cyan-phenoxy | 0,76 |
| 4-Phenylthio-phenoxy | 0,76 |

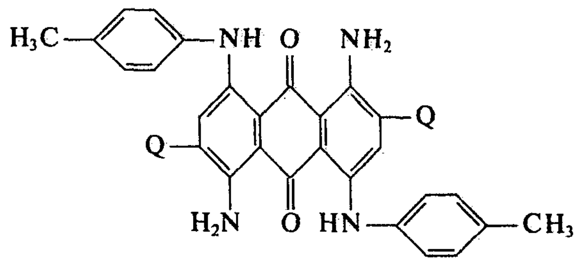

| Q | Ordnungsgrad S |
|---|---|
| 2-Chlor-phenoxy | 0,77 |
| 4-Methyl-phenoxy | 0,76 |
| 2-Ethoxy-phenoxy | 0,76 |
| 4-Methoxy-phenoxy | 0,76 |
| 4-($\beta$-Cyanethyl)-phenoxy | 0,76 |
| 3-Chlor-phenoxy | 0,76 |
| 4-Phenyl-phenoxy | 0,76 |
| 3-Methyl-phenoxy | 0,76 |
| 4-Chlor-phenoxy | 0,76 |
| p-(2-Phenylpropyl-2)-phenoxy | 0,75 |

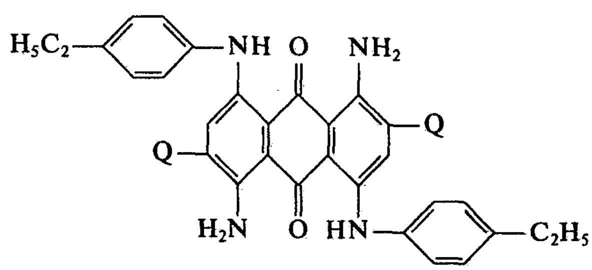

| Q | Ordnungsgrad S |
|---|---|
| 2-Chlor-phenoxy | 0,77 |
| 4-Methyl-phenoxy | 0,76 |
| 2-Ethoxy-phenoxy | 0,76 |
| 4-Methoxy-phenoxy | 0,76 |
| 4-($\beta$-Cyanethyl)-phenoxy | 0,76 |
| 3-Chlor-phenoxy | 0,75 |
| 4-Phenyl-phenoxy | 0,75 |
| 3-Methyl-phenoxy | 0,75 |
| 4-Chlor-phenoxy | 0,75 |

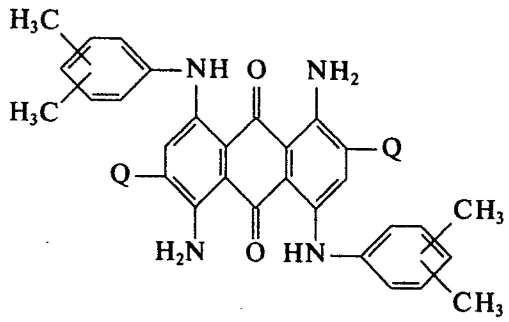

| Q | Ordnungsgrad S |
|---|---|
| 2-Chlor-phenoxy | 0,77 |
| 4-Methyl-phenoxy | 0,75 |
| 2-Ethoxy-phenoxy | 0,75 |
| 4-Methoxy-phenoxy | 0,75 |
| 4-(β-Cyanmethyl)-phenoxy | 0,75 |
| 3-Chlor-phenoxy | 0,75 |
| 4-Phenyl-phenoxy | 0,75 |
| 3-Methyl-phenoxy | 0,75 |

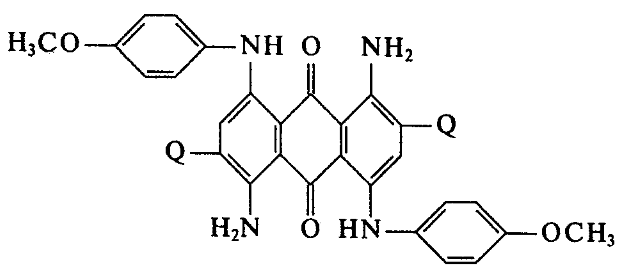

| Q | Ordnungsgrad S |
|---|---|
| 2-Chlor-phenoxy | 0,77 |
| 4-Methyl-phenoxy | 0,75 |
| 2-Ethoxy-phenoxy | 0,75 |
| 4-Methoxy-phenoxy | 0,75 |
| 4-(β-Cyanmethyl)-phenoxy | 0,75 |

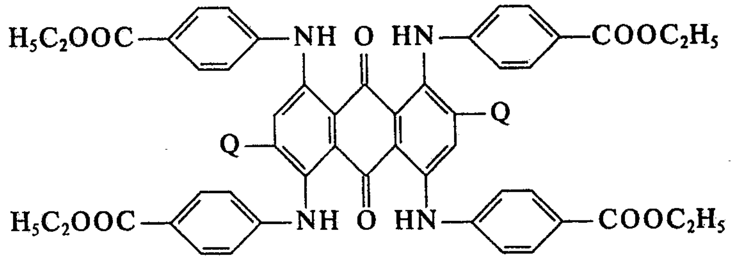

| Q | Ordnungsgrad S |
|---|---|
| 2-Chlor-phenoxy | 0,77 |
| 4-Methyl-phenoxy | 0,76 |
| 2-Ethoxy-phenoxy | 0,76 |
| 4-Methoxy-phenoxy | 0,76 |
| 4-(β-Cyanethyl)-phenoxy | 0,76 |
| 3-Chlor-phenoxy | 0,76 |
| 4-Phenyl-phenoxy | 0,76 |
| 3-Methyl-phenoxy | 0,76 |
| 4-Chlor-phenoxy | 0,76 |
| p-(2-Phenylpropyl-2)-phenoxy | 0,75 |

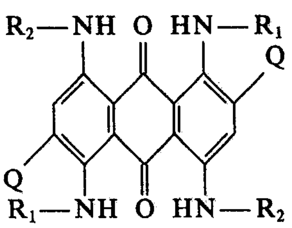

| $R_1$ | $R_2$ | Q | Ordnungsgrad S |
|---|---|---|---|
| 4-Cyclohexylphenyl | 2,6-Diethyl-methyl-phenyl | 2-Chlor-phenoxy | 0,76 |
| 4-Cyclohexylphenyl | 4-t.-Butylphenyl | 2-Chlor-phenoxy | 0,76 |
| 4-Cyclohexylphenyl | Methyl | 2-Chlor-phenoxy | 0,75 |
| Amino | 2,6-Diethyl-4-methyl-phenyl | 2-Chlor-phenoxy | 0,76 |
| Amino | 4-t.-Butylphenyl | 2-Chlor-phenoxy | 0,75 |

**Patentansprüche**

1. Anthrachinonfarbstoffe der Formel

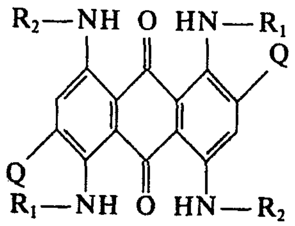

(I)

in der

$R_1$, $R_2$ Wasserstoff, Alkyl, Cycloalkyl, Aryl oder Aralkyl, wobei die genannten Kohlenwasserstoffreste substituiert sein können und

Q einen Aryl- oder heterocyclischen Rest oder einen Rest

$$-OR' \quad -SR' \quad -CH{=}N-R' \quad -\underset{\underset{O}{\|}}{C}-O-R' \quad -CHO$$

oder

$$-SO_2-O-R'$$

wobei

R′ für einen Aryl-, Aralkyl- oder heterocyclischen Rest steht, wobei die für R′ genannten Reste substituiert sein können, bedeuten, mit Ausnahme der Verbindung, bei der $R_1$ und $R_2$ Wasserstoff und Q gleichzeitig Phenoxy bedeuten.

2. Anthrachinonfarbstoffe gemäß Anspruch 1 der Formel

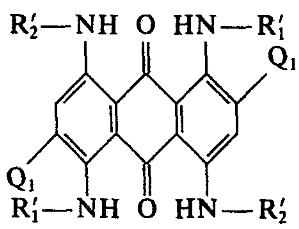

(II)

in der

$R_1'$, $R_2'$ Wasserstoff, Alkyl, Aryl und

$Q_1$ gegebenenfalls substituiertes Phenyl,

$$-OR' \quad -SR' \quad -CH{=}N-R' \quad -\underset{\underset{O}{\|}}{C}-O-R' \quad -CHO$$

oder

$$-SO_2-O-R'$$

bezeichnen, mit Ausnahme der Verbindung, bei der $R_1'$ und $R_2'$ Wasserstoff und Q gleichzeitig Phenoxy bedeuten.

3. Anthrachinonfarbstoffe gemäß Anspruch 2, bei denen

$R_1'$, $R_2'$ für Wasserstoff, $C_1-C_4$-Alkyl oder gegebenenfalls durch Cyclohexyl, $C_1-C_4$-Alkyl, $C_1-C_4$-Alkoxy, ($C_1-C_4$-Alkyl)-carbonyl und ($C_1-C_4$-Alkoxy)-carbonyl substituiertes Phenyl stehen.

4. Anthrachinonfarbstoffe gemäß den Ansprüchen 2 und 3, bei denen $R_1'$ und/oder $R_2'$ Wasserstoff bedeuten.

5. Anthrachinonfarbstoffe der Formel

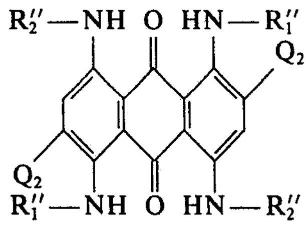

(III)

in der

$R_1''$, $R_2''$ Wasserstoff, 4-Cyclohexylphenyl, 4-Methylphenyl, Dimethylphenyl, Ethylphenyl, 4-Methoxyphenyl, 2,6-Diethoxy-4-methylphenyl, 4-Ethoxycarbonylphenyl und

$Q_2$ Phenyl, 4-Methoxyphenyl, Formyl, Phenoxycarbonyl, Phenoxy, 2-Chlorphenoxy, 4-Methylphenoxy, 2-Ethoxyphenoxy, 4-Methoxyphenoxy, 4-($\beta$-Cyanmethyl)-phenoxy, 3-Chlorphenoxy, 4-Phenylphenoxy, 3-Methylphenoxy, 4-Chlorphenoxy, p-(2-Phenyl-propyl-2)-phenoxy, 2-Methylphenoxy, 2-Methoxyphenoxy, 4-Methylthiophenoxy, 4-t.-Butylphenoxy, 3-Methoxyphenoxy, 4-(4'-Hydroxyphenyl-aminosulfonyl)-phenoxy, 2-Ethylphenoxy, 4-Hydroxyphenoxy, 3-Cyanphenoxy, 4-Phenylthiophenoxy, 1,1,3,3-Tetramethylbutyl-(1)-phenoxy, Cyclohexylphenoxy, 4-Phenylaminosulfonyl-phenoxy, 2-Chlorphenoxysulfonyl, 1-Naphthyloxy, Phenoxycarbonyl, Phenethyloxy, N-(4-Methylphenyl)-formimidoyl, N-(Dibenzofuranyl-2-)-formimidoyl, N-(4-Cyclohexylphenyl)-formimidoyl, N-(4-Phenylamino-phenyl)-formimidoyl, N-(4-Phenylthiazolyl-2)-formimidoyl und N-(4-Methoxyphenyl)-formimidoyl bezeichnen, mit Ausnahme der Verbindung, bei der $R_1''$ und $R_2''$ Wasserstoff und $Q_2$ gleichzeitig Phenoxy bezeichnen.

6. Anthrachinonfarbstoffe der Formel

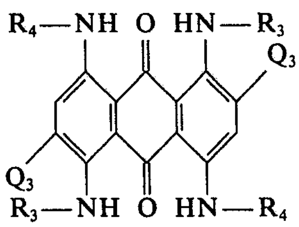

(IV)

in der

$R_3$, $R_4$ Wasserstoff, gegebenenfalls durch $C_1-C_4$-Alkyl oder Cyclohexyl substituiertes Phenyl oder Cyclohexyl bezeichnet und

$Q_3$ für Phenoxy oder Phenylthio, die durch $C_1-C_8$-Alkyl, Cyclohexyl, $C_1-C_4$-Alkoxy, Hydroxy-$C_1-C_4$-alkoxy, Chlor und Brom substituiert sein können oder einen gegebenenfalls durch Phenyl, $C_1-C_8$-Alkylphenyl, Cyclohexyl, $C_1-C_4$-Alkoxyphenyl und (Hydroxy-$C_1-C_4$-alkoxy)-phenyl N-substituierten Formimidoylrest oder einen Benzthiazolylrest stehen, mit Ausnahme der Verbindung, bei der $R_3$ und $R_4$ für Wasserstoff und $Q_3$ gleichzeitig für Phenoxy stehen.

7. Flüssigkristallines Material enthaltend einen Farbstoff gemäß den Ansprüchen 1 bis 6.

8. Flüssigkristallines Material enthaltend 1,4,5,8-Tetraamino-2,6-diphenoxy-anthrachinon.

9. Flüssigkristallines Material enthaltend einen Farbstoff der Formel

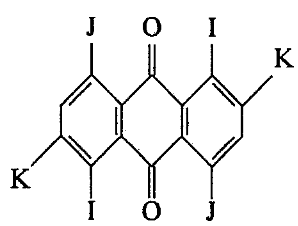

(X)

wobei I, J und K dadurch ermittelt werden, daß der Ordnungsgrad $S > 0,74$ sein soll und dieser nach der Formel

$$S = \frac{e^{y} \cdot 0,85}{1 + e^{y}} \qquad (A)$$

berechnet wird, wobei ein Grundwert von 0,95 für den Fall, daß I = J = K = Wasserstoff vorgegeben wird; zu diesem Grundwert addiert man die angegebenen Inkremente unter Berücksichtigung des Vorzeichens und setzt den so ermittelten Wert y in Formel (A) ein, woraus sich mit der Grenzbedingung S > 0,74 die Menge der besonders bevorzugten Verbindungen ergeben, wobei die Substituenten folgende Bedeutung haben können:

| I, J: | | Inkrement |
|---|---|---|
| 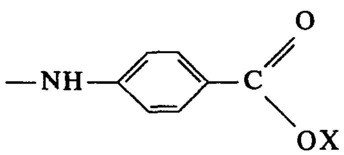 | mit X = n-$C_1-C_4$-Alkyl | 0,05 |
| 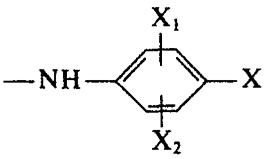 | mit X = n-$C_1-C_4$-Alkyl und $X_1 = X_2$ = H | −0,18 |
| | mit X = $X_1$ = n-$C_1-C_4$-Alkyl und $X_2$ = H | −0,26 |
| | mit X = verzweigtes $C_1-C_4$-Alkyl und $X_1 = X_2$ = H | −0,26 |
| $—NH_2$ | | 0,24 |
| 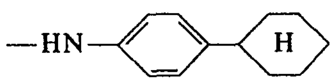 | | 0,24 |
| 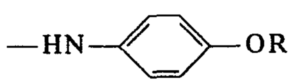 | mit R = n-$C_1-C_4$-Alkyl | −0,20 |
| —HN—R | mit R = n-$C_1-C_4$-Alkyl | −0,26 |
| | mit R = verzweigtes $C_1-C_4$-Alkyl | −0,31 |

| K: | |
|---|---|
| 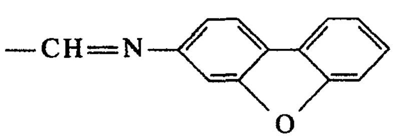 | 0,64 |
| 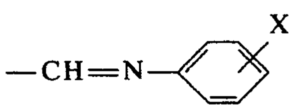 | 0,65 |
| 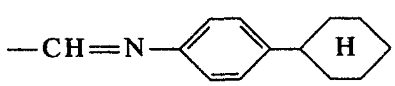 | 0,56 |
| 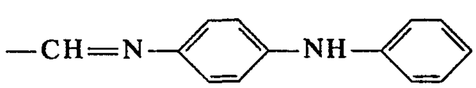 | 0,40 |
| 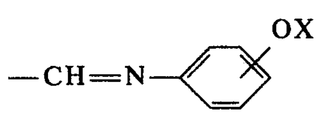 | 0,28 |
| 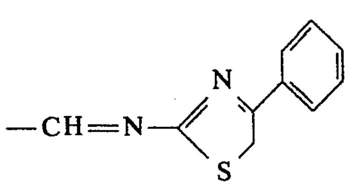 | 0,32 |

| K: | Inkrement |
|---|---|
| 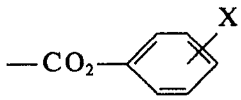 | 0,08 |
| 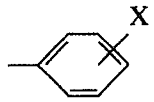 | 0,44 |
| 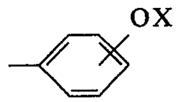 | 0,36 |
| 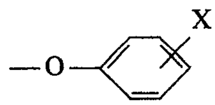 | 0,36 |
| 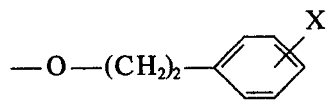 | 0,20 |
| 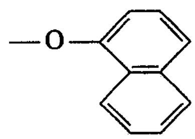 | 0,16 |
| $-CHO$ | 0,20 |

wobei in den für K genannten Resten X immer n-$C_1-C_4$-Alkyl bezeichnet.

**Claims**

1. Anthraquinone dyestuffs of the formula

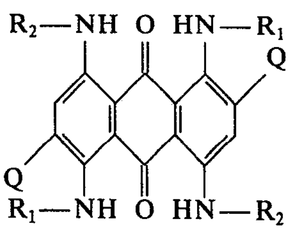

(I)

wherein

$R_1$ and $R_2$ denote hydrogen, alkyl, cycloalkyl, aryl or aralkyl, and the said hydrocarbon radicals can be substituted, and

Q denotes an aryl radical or heterocyclic radical or an

$-OR'$ $-SR'$ $-CH=N-R'$ 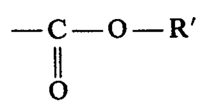 $-CHO$

or

$-SO_2-O-R'$

radical, wherein

R′ represents an aryl, aralkyl or heterocyclic radical, and the radical mentioned for R′ can be substituted;

with the exception of the compound in which $R_1$ and $R_2$ denote hydrogen and Q at the same time denotes phenoxy.

2. Anthraquinone dyestuffs according to Claim 1, of the formula

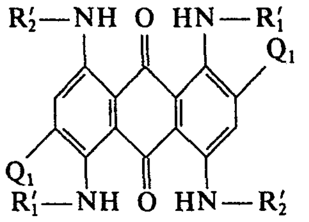

(II)

in which

$R_1$ and $R_2$ denote hydrogen, alkyl or aryl and
$Q_1$ denotes optionally substitued phenyl,

$$-OR' \quad -SR' \quad -CH{=}N-R' \quad -\underset{\displaystyle O}{\underset{\|}{C}}-O-R' \quad -CHO$$

or

$$-SO_2-O-R'$$

with the exception of the compound in which $R_1'$ and $R_2'$ denote hydrogen and Q at the same time denotes phenoxy.

3. Anthraquinone dyestuffs according to Claim 2, in which

$R_1'$ and $R_2'$ represent hydrogen, $C_1-C_4$-alkyl, or optionally cyclohexyl-, $C_1-C_4$-alkyl-, $C_1-C_4$-alkoxy-, ($C_1-C_4$-alkyl)-carbonyl- and ($C_1-C_4$-alkoxy)-carbonyl-substituted phenyl.

4. Anthraquinone dyestuffs according to Claims 2 and 3, in which $R_1'$ and/or $R_2'$ denote hydrogen.

5. Anthraquinone dyestuffs of the formula

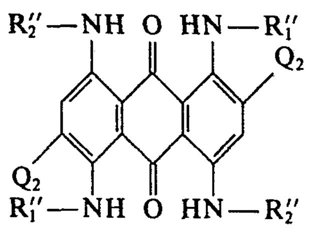

(III)

in which

$R_1''$ and $R_2''$ denote hydrogen, 4-cyclohexylphenyl, 4-methylphenyl, dimethylphenyl, ethylphenyl, 4-methoxyphenyl, 2,6-diethoxy-4-methylphenyl, 4-ethoxycarbonyl-phenyl and
$Q_2$ denotes phenyl, 4-methoxyphenyl, formyl, phenoxycarbonyl, phenoxy, 2-chlorophenoxy, 4-methylphenoxy, 2-ethoxyphenoxy, 4-methoxyphenoxy, 4-($\beta$-cyanomethyl)-phenoxy, 3-chlorophenoxy, 4-phenylphenoxy, 3-methylphenoxy, 4-chlorophenoxy, p-(2-phenyl-prop-2-yl)-phenoxy, 2-methylphenoxy, 2-methoxyphenoxy, 4-methylthiophenoxy, 4-t.-butyl-phenoxy, 3-methoxyphenoxy, 4-(4'-hydroxyphenylaminosulphonyl)-phenoxy, 2-ethylphenoxy, 4-hydroxyphenoxy, 3-cyanophenoxy, 4-phenylthiophenoxy, 1,1,3,3-tetramethylbut-1-yl-phenoxy, cyclohexylphenoxy, 4-phenylaminosulphonyl-phenoxy, 2-chlorophenoxysulphonyl, 1-naphthyloxy, phenoxycarbonyl, phenethyloxy, N-(4-methylphenyl)-formimidoyl, N-(dibenzofuran-2-yl)-formimidoyl, N-(4-cyclohexylphenyl)-formimidoyl, N-(4-phenylamino-phenyl)-formimidoyl, N-(4-phenylthiazol-2-yl)-formimidoyl and N-(4-methoxyphenyl)-formimidoyl,

with the exception of the compound in which $R_1''$ and $R_2''$ denote hydrogen and $Q_2$ at the same time denotes phenoxy.

6. Anthraquinone dyestuffs of the formula

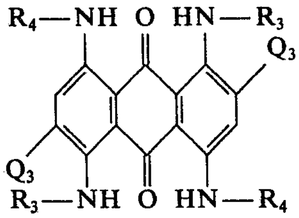

(IV)

in which

$R_3$ and $R_4$ denote hydrogen, optionally $C_1-C_4$-alkyl- or cyclohexyl-substituted phenyl or cyclohexyl and $Q_3$ represents phenoxy or phenylthio, which can be substituted by $C_1-C_8$-alkyl, cyclohexyl, $C_1-C_4$-alkoxy, hydroxy-$C_1-C_4$-alkoxy, chlorine and bromine, or a formimidoyl radical which is optionally N-substituted by phenyl, $C_1$-$C_8$-alkylphenyl, cyclohexyl, $C_1-C_4$-alkoxyphenyl and (hydroxy-$C_1-C_4$-alkoxy)-phenyl, or represents a benzthiazolyl radical, with the exception of the compound in which $R_3$ and $R_4$ represent hydrogen and $Q_3$ at the same time represents phenoxy.

7. Liquid-crystalline material containing a dyestuff according to Claims 1 to 6.

8. Liquid-crystalline material containing 1,4,5,8-tetramino-2,6-diphenoxy-anthraquinone.

9. Liquid-crystalline material containing a dyestuff of the formula

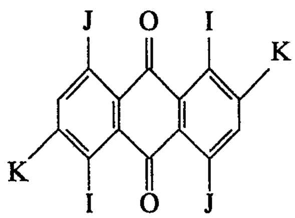

(X)

wherein I, J and K are determined so that the degree of order S is $>0.74$, calculated from the formula

$$S = \frac{e^{y} \cdot 0,85}{1 + e^{y}} \qquad (A)$$

taking a base value of 0.95 for the case where I = J = K = hydrogen, to which base value are added the increments mentioned, taking into account the sign, the thus determined value y then being inserted in formula (A), from which, using the limiting ciondition $S > 0.74$, the amount of the particularly preferred compounds results, the possible meanings of the substituents being as follows:

| I, J: | | Increment |
|---|---|---|
| 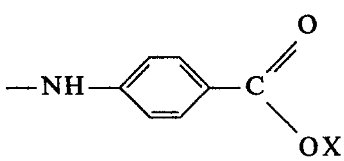 | with $X$ = n-$C_1-C_4$-alkyl | 0.05 |
| 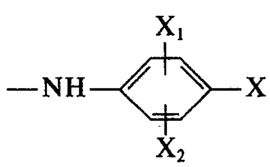 | with $X$ = n-$C_1-C_4$-alkyl and $X_1 = X_2 = H$ | −0.18 |
| | with $X = X_1$ = n-$C_1-C_4$-alkyl and $X_2 = H$ | −0.26 |
| | with $X$ = branched $C_1-C_4$-alkyl and $X_1 = X_2 = H$ | −0.26 |

| I, J: | | Increment |
|---|---|---|
| $—NH_2$ | | 0.24 |
| 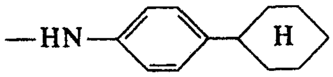 | | 0.24 |
| 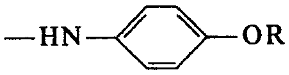 | with R = n-$C_1-C_4$-alkyl | −0.20 |
| —HN—R | with R = n-$C_1-C_4$-alkyl | −0.26 |
| | with R = branched $C_1-C_4$-alkyl | −0.31 |
| K: | | |
| 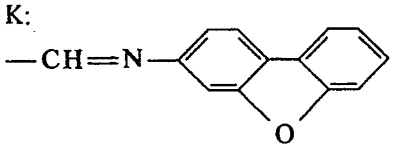 | | 0.64 |
| 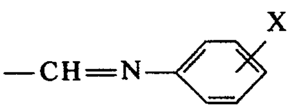 | | 0.65 |
| 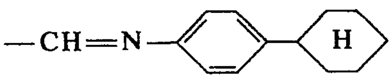 | | 0.56 |
| 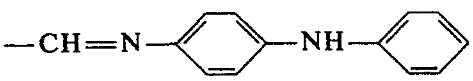 | | 0.40 |
| 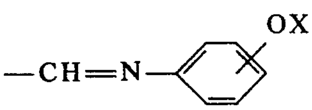 | | 0.28 |
| 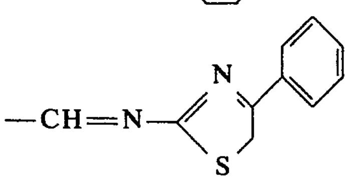 | | 0.32 |
| 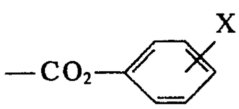 | | 0.08 |
| 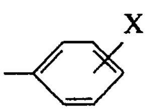 | | 0.44 |
| 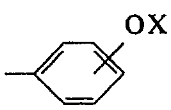 | | 0.36 |
| 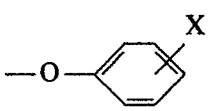 | | 0.36 |
| 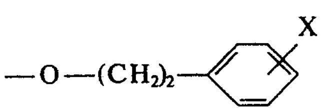 | | 0.20 |
| 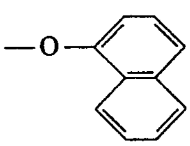 | | 0.16 |
| —CHO | | 0.20 |

wherein X, in the radicals mentioned for K, always denotes n-$C_1-C_4$-alkyl.

**Revendications**

1. Colorants anthraquinoniques de formule

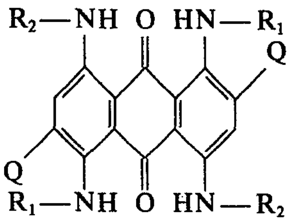

(I)

dans laquelle

$R_1$, $R_2$ représentent l'hydrogène, un reste alkyle, cycloalkyle, aryle ou aralkyle, les restes hydrocarbonés mentionnés pouvant être substitués et

Q représente un reste aryle ou hétérocyclique ou un reste

$$-OR' \quad -SR' \quad -CH{=}N-R' \quad -\underset{\underset{O}{\|}}{C}-O-R' \quad -CHO$$

ou

$$-SO_2-O-R'$$

où

R' est un reste aryle, aralkyle ou hétérocyclique, les restes mentionnés pour R' pouvant être substitués, à l'exception du composé dans lequel $R_1$ et $R_2$ représentent l'hydrogène et Q désigne en même temps un groupe phénoxy.

2. Colorants anthraquinoniques suivant la revendication 1, de formule

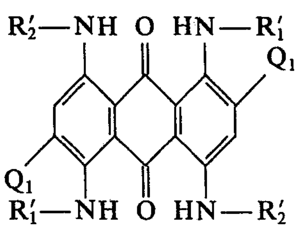

(II)

dans laquelle

$R_1'$, $R_2'$ désignent l'hydrogène, un reste alkyle, un reste aryle et

$Q_1$ désigne un reste phényle éventuellement substitué,

$$-OR' \quad -SR' \quad -CH{=}N-R' \quad -\underset{\underset{O}{\|}}{C}-O-R' \quad -CHO$$

ou

$$-SO_2-O-R'$$

à l'exception du composé dans lequel $R_1'$ et $R_2'$ représentent l'hydrogène et Q représente en même temps le groupe phénoxy.

3. Colorants anthraquinoniques suivant la revendication 2, dans lesquels

$R_1'$, $R_2'$ désignent l'hydrogène, un reste alkyle en $C_1$ à $C_4$ ou un reste phényle éventuellement substitué par un radical cyclohexyle, alkyle en $C_1$ à $C_4$, alkoxy en $C_1$ à $C_4$, (alkyle en $C_1$ à $C_4$) carbonyle et (alkoxy en $C_1$ à $C_4$) carbonyle.

4. Colorants anthraquinoniques suivant les revendications 2 et 3, dans lesquels $R_1'$ et/ou $R_2'$ représentent l'hydrogène.

5. Colorants anthraquinoniques de formule

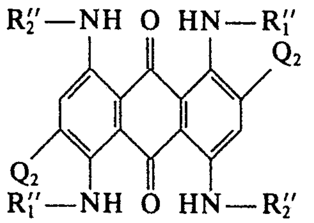

(III)

dans laquelle

$R_1''$, $R_2''$ représentent l'hydrogène, un groupe 4-cyclohexylphényle, 4-méthylphényle, diméthylphényle, éthylphényle, 4-méthoxyphényle, 2,6-diéthoxy-4-méthylphényle, 4-éthoxycarbonylphényle et

$Q_2$ désigne un groupe phényle, 4-méthoxyphényle, formyle, phénoxycarbonyle, phénoxy, 4-chlorophénoxy, 4-méthylphénoxy, 2-éthoxyphénoxy, 4-méthoxyphénoxy, 4-($\beta$-cyanométhyl)-phénoxy, 3-chlorophénoxy, 4-phénylphénoxy, 3-méthylphénoxy, 4-chlorophénoxy, p-(2-phénylpropyl-2)-phénoxy, 2-méthylphénoxy, 2-méthoxyphénoxy, 4-méthylthiophénoxy, 4-tertio-butylphénoxy, 3-méthoxyphénoxy, 4-(4'-hydroxyphénylaminosulfonyl)-phénoxy, 2-éthylphénoxy, 4-hydroxyphénoxy, 3-cyanophénoxy, 4-phénylthiophénoxy, 1,1,3,3-tétraméthylbutyl-(1)-phénoxy, cyclohexylphénoxy, 4-phénylamino-sulfonylphénoxy, 2-chlorophénoxysulfonyle, 1-naphtyloxy, phénoxycarbonyle, phénéthyloxy, N-(4-méthylphényl)-formimidoyle, N-(dibenzofurannyl-2)-formimidoyle, N-(4-cyclohexylphényl)-formimidoyle, N-(4-phénylaminophényl)-formimidoyle, N-(4-phénylthioazolyl-2)-formimidoyle et N-(4-méthoxyphényl)-formimidoyle, à l'exception du composé dans lequel $R_1''$ et $R_2''$ désignent l'hydrogène et $Q_2$ est en même temps le groupe phénoxy.

6. Colorants anthraquinoniques de formule

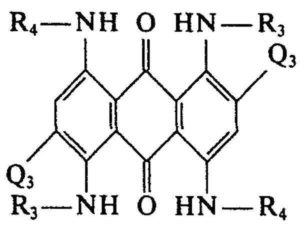

(IV)

dans laquelle

$R_3$, $R_4$ désignent l'hydrogène, un groupe phényle éventuellement substitué par un radical alkyle en $C_1$ à $C_4$ ou cyclohexyle ou un groupe cyclohexyle et

$Q_3$ représente un groupe phénoxy ou un groupe phénylthio qui peut être substitué par un radical alkyle en $C_1$ à $C_8$, cyclohexyle, alkoxy en $C_1$ à $C_4$, hydroxy-alkoxy en $C_1$ à $C_4$, chloro et bromo ou un reste formimidoyle éventuellement substitué sur l'atome d'azote par un radical phényle, (alkyle en $C_1$ à $C_8$)-phényle, cyclohexyle, (alkoxy en $C_1$ à $C_4$)-phényle et (hydroxy-alkoxy en $C_1$ à $C_4$)-phényle ou un reste benzothiazolyle, à l'exception du composé dans lequel $R_3$ et $R_4$ représentent l'hydrogène et $Q_3$ est en même temps un groupe phénoxy.

7. Matière à cristallinité liquide contenant un colorant suivant les revendications 1 à 6.

8. Matière à cristallinité liquide contenant la 1,4,5,8-tétra-amino-2,6-diphénoxyanthraquinone.

9. Matière à cristallinité liquide contenant un colorant de formule

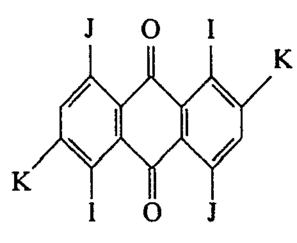

(X)

dans laquelle I, J et K sont déterminés par le fait que le degré d'ordre S doit être supérieur à 0,74 et est calculé d'après la formule

$$S = \frac{e^{y} \cdot 0{,}85}{1 + e^{y}} \qquad (A)$$

une valeur fondamentale de 0,95 étant préétablie pour le cas où I = J = K = hydrogène; on ajoute à cette valeur fondamentale les incréments indiqués en tenant compte du signe et on fait intervenir la valeur y ainsi déterminée dans la formule (A), et on en déduit, avec la condition limite S > 0,74, la quantié des composés préférentiels, les substituants pouvant avoir les définitions suivantes:

| I, J: | | Incrément |
|---|---|---|
| 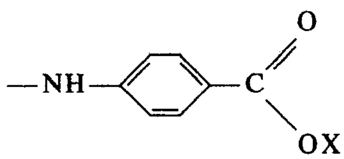 | avec X = n-alkyle en $C_1$ à $C_4$ | 0,05 |
| 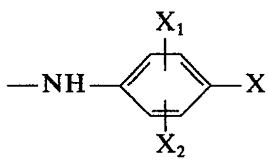 | avec X = n-alkyle en $C_1$ à $C_4$ et $X_1 = X_2$ = H | −0,18 |
| | avec X = $X_1$ = n-alkyle en $C_1$ à $C_4$ et $X_2$ = H | −0,26 |
| | avec X = alkyle en $C_1$ à $C_4$ ramifié et $X_1 = X_2$ = H | −0,26 |
| $-NH_2$ | | 0,24 |
| 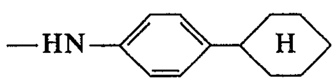 | | 0,24 |
| 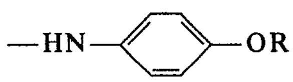 | avec R = n-alkyle en $C_1$ à $C_4$ | −0,20 |
| —HN—R | avec R = n-alkyle en $C_1$ à $C_4$ | −0,26 |
| | avec R = alkyle en $C_1$ à $C_4$ ramifié | −0,31 |
| K: | | |
| 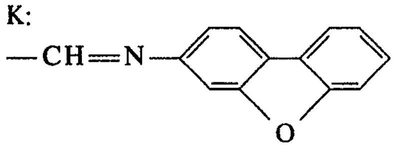 | | 0,64 |
| 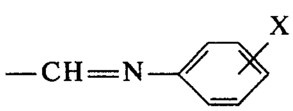 | | 0,65 |
| 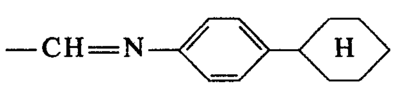 | | 0,56 |
| 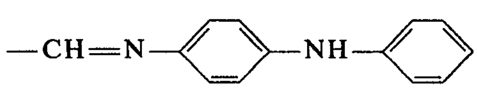 | | 0,40 |
| 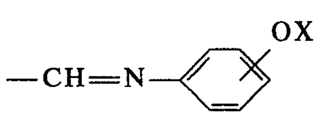 | | 0,28 |
| 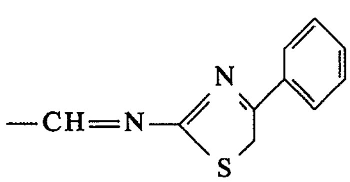 | | 0,32 |

| K: | Incrément |
|---|---|
| 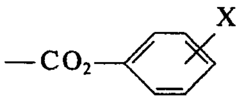 | 0,08 |
| 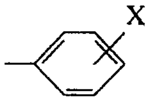 | 0,44 |
| 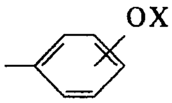 | 0,36 |
| 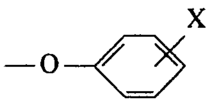 | 0,36 |
| 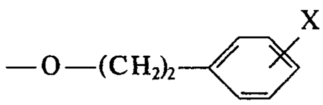 | 0,20 |
| 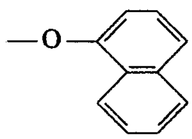 | 0,16 |
| $-CHO$ | 0,20 |

X désignant toujours un groupe n-alkyle en $C_1$ à $C_4$ dans les restes mentionnés pour K.